(19) **Europäisches Patentamt / European Patent Office / Office européen des brevets**

(11) **EP 1 428 358 B1**

(12) **EUROPEAN PATENT SPECIFICATION**

(45) Date of publication and mention of the grant of the patent:
**24.08.2011 Bulletin 2011/34**

(21) Application number: **02760413.1**

(22) Date of filing: **13.09.2002**

(51) Int Cl.:
**H04L 12/56** (2006.01)

(86) International application number:
**PCT/GB2002/004203**

(87) International publication number:
**WO 2003/026233 (27.03.2003 Gazette 2003/13)**

(54) **DATA COMMUNICATIONS METHOD AND SYSTEM FOR TRANSMITTING MULTIPLE DATA STREAMS CALCULATING AVAILABLE BANDWIDTH PER STREAM AND BIT STREAM TRADE-OFF**

DATENKOMMUNIKATIONSMETHODE UND -SYSTEM ZUR ÜBERTRAGUNG VON MEHREREN DATENSTRÖMEN, DIE VERFÜGBARE BANDBREITE PRO DATENSTROM BERECHNEND UND ANPASSEND

PROCEDE ET SYSTEME DE TRANSMISSION DES DONNEES POUR LA TRANSMISSION DE MULTIPLES FLOTS DE DONNEES PAR CALCUL DE BANDE PASSANTE DISPONIBLE PAR FLOT ET CHOIX DE TRAINS DE BITS

(84) Designated Contracting States:
**DE FR GB**

(30) Priority: **21.09.2001 EP 01308054**

(43) Date of publication of application:
**16.06.2004 Bulletin 2004/25**

(73) Proprietor: **BRITISH TELECOMMUNICATIONS public limited company**
**London**
**EC1A 7AJ (GB)**

(72) Inventors:
• **URZAIZ, Eduardo**
**Ipswich, Suffolk IP4 1NL (GB)**
• **WALKER, Mathew, David**
**Felixstowe, Suffolk IP11 9SN (GB)**

(74) Representative: **Roberts, Simon Christopher et al**
**BT Group Legal**
**Intellectual Property Department**
**PP C5A. BT Centre**
**81 Newgate Street**
**London**
**EC1A 7AJ (GB)**

(56) References cited:
**EP-A- 1 045 555    WO-A-00/41365**
**US-A- 5 864 678    US-B1- 6 269 078**

• **FLOYD S: "CONNECTIONS WITH MULTIPLE CONGESTED GATEWAYS IN PACKET-SWITCHED NETWORKS. ÖPART 1: ONE-WAY TRAFFIC" COMPUTER COMMUNICATIONS REVIEW, ASSOCIATION FOR COMPUTING MACHINERY. NEW YORK, US, vol. 21, no. 5, 1 October 1991 (1991-10-01), pages 30-47, XP000240806 ISSN: 0146-4833**

**Description**

Technical Field

The present invention relates to a method and system providing for data communications, and in particular to a method and system for transmitting multiple data streams across a network, as well as a method and system for receiving such transmitted data. Furthermore, the present invention also relates to a computer readable storage medium storing a computer program which when run on a computer controls the computer to perform the aforementioned methods of data transmission and receipt.

Background to the Invention

In recent years there has been a tremendous increase in the number, extent, and number of users of telecommunications networks for data communications. Previously, it was a characteristic of much of the data traffic carried on such telecommunications networks that the data was substantially "message-based". By "message-based" we mean that the data transmitted on a network formed part of, for example, e-mail messages, files in the process of being transferred, or other application data being passed between client-server systems. A principal characteristic of such "message-based" data is that it is not particularly time critical that the data must arrive at the receiver terminal within a certain time of transmission for it to be of any use. Rather, provided the data arrives at the receiver within a reasonable amount of time then it is still of use to the eventual user. Previously-known examples of such "message-based" data are for example standard e-mails and files transferred using the file transfer protocol (FTP).

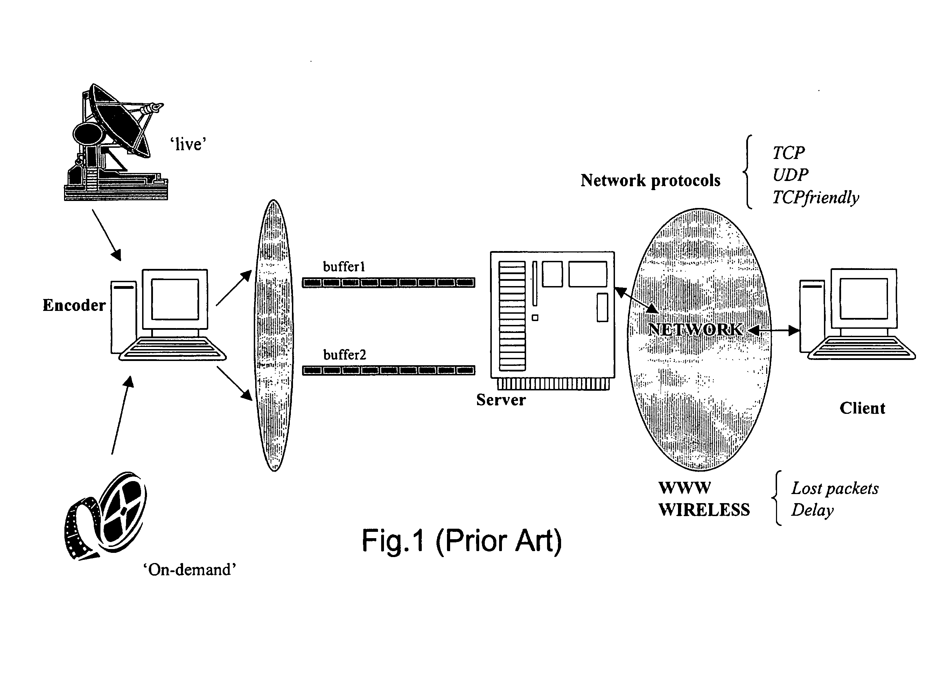

More recently, interest has turned away from the capability of data communications networks in sending traditional message-based data towards the network and associated equipment being able to transmit data in a continuous data stream from a transmitter to a receiver. Frequently the value of such data is time critical in that the network must transport the data from the transmitter to the receiver terminal as smoothly and quickly as possible, preferably avoiding the need for data to be re-sent. An example of such a data streaming system known in the prior art is described next with respect to Fig.1.

Commonly, the data to be streamed is multi-media data such as, for example, audio and video data. The audio and video data may be from a live audio visual broadcast such as a news or sports event, or may be sourced from, for example, a video-on-demand service which permits subscribers to watch television programmes and films of their choice as and when they choose. Whatever the source of the data, however, the respective audio and video feed data must first be suitably digitally encoded in order to compress the audio and video data signals to a size suitable for transmission over a network. Commonly, audio and video encoding is performed in accordance with one of the various MPEG standards.

Following encoding of the audio and video data, the encoded data is passed to a network server, where it is stored in separate audio and video buffers prior to transmission over the network to a client.

Following buffering, the data is transmitted over the network as discussed in more detail next, and is received at the receiver wherein it is buffered prior to decoding. Decoding is performed at the receiver by an appropriate decoder, and the decoded data sent to the application running at the receiver for reproduction.

In the prior art, European patent application EP1045555 discloses a method and apparatus for management of communications over media of finite bandwidth that allow management of communications comprising a plurality of data streams from a plurality of sources. Embodiments are described which effectively quantify and control data streams comprising data transferred at either regular or irregular data rates, and which provide for estimation of data rate needs, measurement and analysis of current and historical data rate parameters, dynamic allocation of available bandwidth, and which support cooperation between data sources and destinations in the management processes.

One of the most common types of network presently in use is of course those which form the internet, and which use internet protocol (IP) to transfer data in the form of IP datagrams in the network layer of the network. Data transport over the network layer is provided by the transport layer protocols transmission control protocol (TCP) and user datagram protocol (UDP). Both TCP and UDP are known in the art, and are described in, for example, Tannenbaum A.S., "Computer Networks" Third Edition, Prentice Hall, PP521-542.

Frequently UDP has been used for streaming data services over a network, and especially for streaming audio and video data. However, UDP is a connectionless transport protocol and therefore offers no quality of service control mechanisms nor the ability to permit a particular quality of service to be guaranteed to a user. Furthermore, the use of UDP for streaming data causes further problems in that as it always sends out data at the same transmission rate it makes no consideration for the network congestion state, which can easily result in packet losses and hence lost data. That is, when using UDP for data streaming then in the event that network congestion occurs UDP continues to transmit data packets at the same transmission rate thereby contributing to the network congestion. In the worst case with no mechanism by which to alleviate the network .. congestion the result can be that many or all of the packets of the data stream are lost.

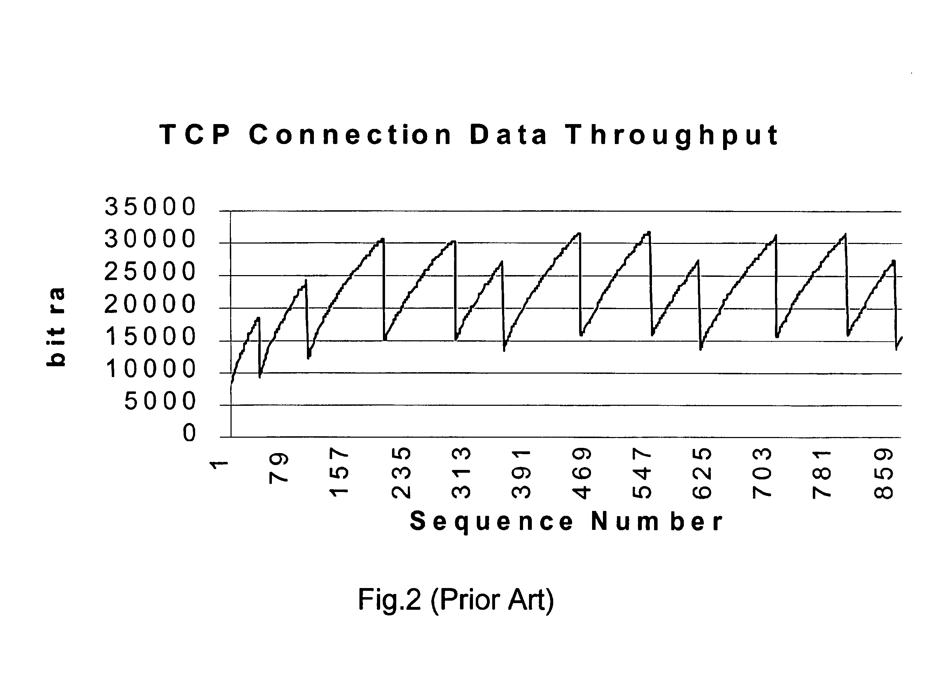

The problems described above associated with the use of UDP for data streaming can be alleviated slightly by using TCP as the network transport protocol. TCP is a connection-oriented protocol that provides packet acknowledgements to the sending terminal which permits an increased amount of control over the transmission rate of the data. More particularly, TCP incorporates a transmission rate control algorithm to account for network congestion, as described in *ibid,* page 536 to 539. The TCP transmission control algorithm is of the type known as "additive-increase-multiplicative-decrease", wherein once a basic threshold transmission rate is reached, the transmission rate is then increased in an additive manner packet by packet until a packet loss occurs, whereupon the transmission rate is then decreased in a multiplicative manner, e.g. by dividing the transmission rate in half. The TCP transmission rate algorithm therefore takes into account network congestion by reducing the transmission rate of a data stream when a packet loss occurs, but the multiplicative nature of the decrease means that the change in data throughput over the network can be quite high. Fig. 2 illustrates an example data throughout using TCP whence it will be seen that the data transmission rate can vary considerably with respect to time. The relatively high variance in transmission rate using TCP means that it is not particularly suited to data streaming applications, where a steady state transmission rate which changes smoothly with respect to time is preferable.

The problems associated with the frequent changes in data transmission rate using TCP for streaming data are further compounded when two or more data streams which contain related data, such as, for example, audio and video data, are to be transmitted simultaneously. In this case, when using TCP and taking the transmission of audio and video data in separate data streams as an example, because the audio stream is transmitted over a separate TCP connection from the video stream then each respective connection will apply its own transmission rate control algorithm without any regard to the transmission rate of the other stream. This has the resulting effect that over time the data throughput of the audio stream over the network becomes substantially the same as that of the video stream, whereas in reality for most audio visual sources there is commonly much more video data to be transmitted per unit time than audio data. This equality in transmission rate between the audio and video streams thus achieved by TCP can have the effect at the receiver of affecting proper reproduction of the data, in that because the two types of data are not transmitted at respective rates which match the ratio of the generation of audio and video data, there will commonly be sufficient audio data stored in the receiver audio buffer for reproduction by the audio visual application, but insufficient video data in the receiver video buffer for reproduction at the same time as the audio data.

Further problems arise from the separate application of the transmission rate control algorithm to each respective stream, and in particular from the multiplicative decrease nature of the standard TCP transmission rate control algorithm. Consider the case where an audio stream is being transmitted over a TCP connection separately to a video stream, which is also being transmitted using TCP. Usually, as explained previously, the average throughput of each connection would be substantially the same, but due to the multiplicative decrease in transmission rate when a packet loss on one of the streams occurs, at any particular moment in time there can in fact be large differences in the respective transmission rates of the two streams. These potentially large short term variations in transmission rate between the two streams introduce uncertainties into the data transmission, and can cause problems with the data buffers in the receiver, in that where temporary large differences occur, the audio buffer, for example, might fill and overflow thereby losing data, whereas the corresponding video buffer may have emptied therefore preventing AV reproduction from taking place. Furthermore, the potential temporary large differences in data transmission rate between these streams can frequently violate the required transmission rate ratios of the two types of data for proper reproduction, thereby resulting in similar problems with subsequent decoding and reproduction as explained previously.

The above mentioned problems as caused by the application of the TCP transmission rate control algorithm to multiple data streams have been addressed previously by using the connectionless UDP protocol for each stream, and simply transmitting each stream at the appropriate transfer rate to maintain the correct ratio of data between the streams. However, as discussed previously UDP makes no provision for controlling the transmission rates to take into account network congestion and the subsequent loss of data that can arise through such congestion. Therefore there is still a need for a transmission rate control method and system which can both maintain the correct ratio of data and the stability of the transmission rate of each stream; while still taking into account the problems caused by network congestion.

Summary of the Invention

The present invention addresses the aforementioned problems by providing a method and system of data transmission wherein a network server calculates the total transmission rate available for the transmission of multiple data streams using a transmission rate formula which has been derived to take into account various factors, such as for example possible network congestion. The server then transmits the multiple data streams at respective data transmission bit rates, controlling the respective data transmission rates of the streams such that the sum of the bit rates is less than or equal to the calculated total rate available, whilst maintaining the appropriate transmission rates between the multiple streams by trading bit rate between the streams. This has the effect of providing for a smooth steady state transmission rate for each data stream whilst maintaining the appropriate ratio of the different types of data to be transmitted in each stream.

In view of the above, from a first aspect according to the present invention there is provided a method of data transmission from a transmission side to a receiver side across a network, comprising the steps of:

calculating a total transmission rate for the transmission of data using a transmission rate formula;
transmitting data onto the network for transmission to a receiver in at least two separate data streams each at a respective data transmission bit rate; and
controlling the respective data transmission rates of at least a subset of the data streams to trade bit-rate between said streams;
wherein the sum of the respective transmission rates of each data stream is substantially equal to or less than the calculated total transmission rate;
characterised in that said step of calculating a total transmission rate for the transmission of data is performed on the transmission side prior to transmission of said data.

From a second aspect, the present invention also provides a system for data transmission from a transmission side to a receiver side across a network, comprising:

transmission rate calculation means for calculating a total transmission rate for the transmission of data using a transmission rate formula;
data stream transmission means for transmitting data onto the network for transmission to a receiver in at least two separate data streams each at a respective data transmission bit rate; and
data stream controlling means controlling the respective data transmission rates of at least a subset of the data streams to trade bit-rate between said streams;
wherein the data stream controlling means is further operable such that the sum of the respective transmission rates of each data stream is controlled to be substantially equal to or less than the calculated total transmission rate;
characterised in that said transmission rate calculation means is arranged to calculate said total transmission rate on the transmission side prior to transmission of said data.

By using a transmission rate formula for the calculation of the total transmission rate available, the present invention provides the advantage that it is possible to take network congestion and resulting packet loss into account in calculating the total bandwidth available for the multiple data streams. Furthermore, by controlling the respective transmission rates of each data stream within the total calculated bandwidth available it is possible to control the ratio of data transmitted in each stream, by trading bit rate between the respective streams within the calculated total available bandwidth. This has the effect of providing for a smooth steady state transmission rate of each data stream, at a rate appropriate to maintain the data ratios between each stream.

Preferably, the data in each data stream is related in that, for example, it is intended for reproduction or use at the receiver at the same time. In the preferred embodiment, the data in one of the streams is audio data, whereas the data in another of the streams is video data.

Moreover, preferably the data transmission rates of the data streams are controlled so as to prevent data buffers in the receiver which receive the data in the data streams from filling at an excessive rate. By controlling the respective transmission rates in this manner it is possible to prevent the data buffers in the receiver from overflowing, thus resulting in data being lost.

Furthermore, preferably the present invention is further arranged to receive feedback data from the receiver indicative of at least the decoding rate of the transmitted data in each stream received at the receiver, and then controls the data transmission rates of at least a subset of the respective data streams in response to the received data as a function of at least the receiver decoding rates. By receiving such information from the receiver it is possible to further dynamically control the respective transmission rates of each stream not only to maintain a steady state transmission rate and maintain the respective data ratios, but also to remotely control the state of the data buffers in the receiver terminal in order to ensure that no packets are lost due to buffer overflow.

In the preferred embodiment, the total transmission rate is calculated to give an average throughput of data over the network similar to that obtained using transport control protocol. This has the advantage that the invention becomes TCP-friendly, in that it provides for a reduction in packet loss ratios and an improvement in bandwidth utilisation, as well as being fair towards competing TCP connections on a network.

Preferably, the invention is further arranged to receive feedback data from the receiver indicative of one or more of a round-trip time (RTT), a loss rate value, and/or a receiving rate value at the receiver, and furthermore to calculate the total transmission rate as a function of one or more of the received values indicated by the feedback data.

The round-trip time is a measure of the time it takes for data to travel from a transmitter to the receiver and back to the transmitter, whereas the loss rate value is a measure of the amount of data transmitted to the receiver which is lost in the network. The receiving rate value is the number of bits received by the receiver in the round-trip time.

By providing feedback from the receiver to the server it is possible to provide the server with up to date information indicative of, for example, congestion conditions on the network resulting in packet losses. The server then becomes capable of calculating the total transmission rate available dependent upon the present conditions on the network, thereby optimising the transmission rate at which the streams are transmitted.

Furthermore, from a third aspect the present invention further provides a computer readable storage medium storing a computer program which when run on a computer controls the computer to perform a method according to the first aspect of the invention.

Preferably, the computer readable storage medium is any of an optical disk, a magnetic disk, a magneto-optical disk, a solid state computer memory, or any other suitable data storage medium.

From a fourth aspect, the present invention also provides a method of receiving data from a network, the data having been transmitted in accordance with the first or second aspects of the invention, the method comprising the steps of:

receiving at least two separate data streams each at a respective data transmission rate;
passing the received data in each stream to a respective data buffer for buffering therein;
calculating one or more quantitative values indicative of one or more characteristics of the received data; and
transmitting the calculated quantitative values to a transmitter for use in calculating the total transmission rate for data transmitted therefrom.

By providing for the transmission of the quantitative values indicative of the characteristics of the received data, the total transmission rate available for transmission from the transmitter can be calculated more accurately taking into account present network conditions.

Preferably, in the fourth aspect the present invention is further arranged to provide for decoding of the data in each buffer at a respective decoding rate, wherein the respective data decoding rates are transmitted to the transmitter as at least one of the calculated quantitative values.

By communicating to the transmitter what the data decoding rates are in each of the receiver buffers, the transmitter can further control the data transmission rates of each stream to ensure that the data buffers in the receiver are not filled, and thereby that data is not lost for this reason.

From a fifth aspect the present invention also provides a system for receiving data from a network, the data having been transmitted according to either of the first or second aspects of the present invention, the system comprising data receiving means for receiving at least two separate data streams each at a respective data transmission rate;

at least two data buffers arranged to receive data therein from the respective received data streams;
calculation means for calculating one or more quantitative values indicative of one or more characteristics of the received data; and
data transmission means for transmitting the calculated quantitative values to the transmitter for use in calculating the total transmission rate for data transmitted therefrom.

In the fifth aspect, the present invention provides the same features and advantages as previously described in the fourth aspect.

Furthermore, from a sixth aspect the present invention also provides a computer readable storage medium storing a computer program which when run on a computer controls the computer to perform the method according to the fourth aspect of the invention. As in the third aspect, the invention according to the sixth aspect may be embodied in any one or more of a magnetic disk, an optical disk, a magneto-optical disk, a solid state computer memory, or the like.

Brief Description of the Drawings

Further features and advantages of the present invention will become apparent from the following description of a preferred embodiment thereof, presented by way of example only, and by reference to the accompanying drawings, wherein like reference numerals refer to like parts, and wherein:-

Fig.1 is an illustrative block diagram illustrating the elements of a multimedia streaming system of the prior art;
Fig.2 is a graph illustrating data throughput of a network using the prior art TCP protocol;
Fig.3 is a block diagram illustrating the arrangement of a server and a client apparatus used in the present invention;
Fig.4 is a block diagram of the main elements of a server apparatus for use in an embodiment of the present invention;
Fig.5 is a block diagram of the functional elements used in a client apparatus for use in an embodiment of the present invention;

Fig.6 is a flow diagram of the method steps performed by a server apparatus in the embodiment of the present invention;

Fig.7 is a flow diagram of the method steps performed by a client apparatus used in the embodiment of the present invention;

Fig.8 is a flow diagram illustrating the steps involved in the calculation of the loss event rate used in the embodiment of the invention;

Fig.9 is a graph of filter coefficients used in the embodiment of the invention;

Fig.10 is a block diagram of the filter elements used in the receiver apparatus in the embodiment of the invention; and

Fig.1 is a graph of data throughput across a network for one of the data streams achieved using the embodiment of the invention.

<u>Description of the Preferred Embodiment</u>

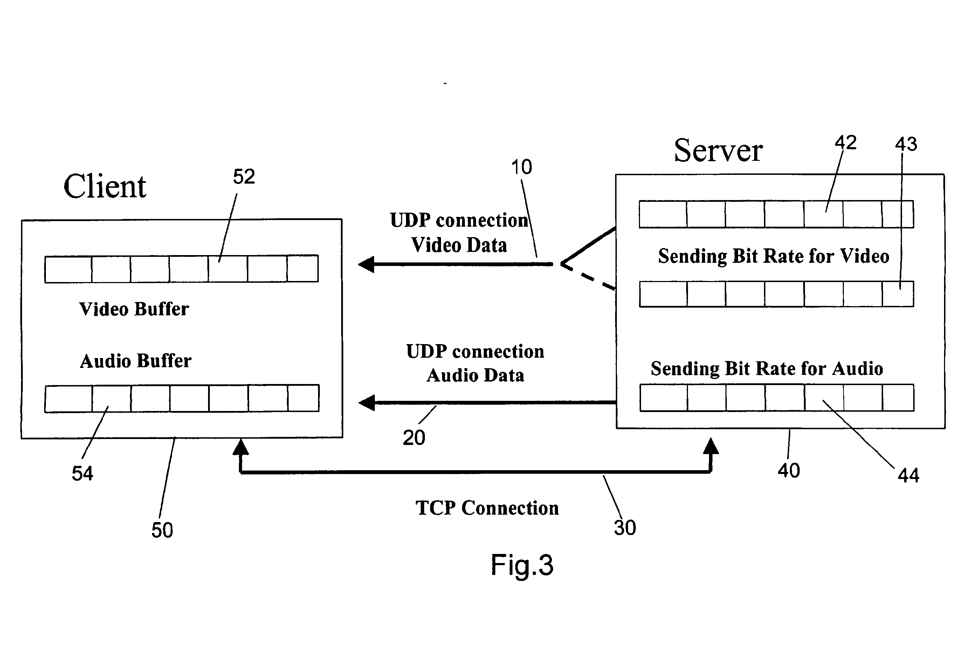

The construction and operation of the various elements which constitute a preferred embodiment of the present invention will now be described with reference to Figs. 3-11. It should be noted that the preferred embodiment described herein is a non-limiting example of the application of the present invention to the transmission of multimedia data such as audio and video data, but that the present invention may find use in almost any application where multiple streams of data are to be transmitted over a network.

The two basic elements which form the preferred embodiment of the present invention are depicted in Fig. 3. Here, it will be seen that a server 40 is provided which has provided therein a first video buffer 42 and a second video buffer 43. The first video buffer 42 is arranged to store encoded video data which has been coded at a first video encoding rate, whereas the second video buffer 43 is arranged to store more encoded video data which has been encoded at a second, lower encoding rate than the encoded video data stored in the first buffer 42. It should be noted that the encoded video data stored in the two buffers 42 and 43 is derived from the same original video data, but that it has merely been encoded using different encoding rates to give the different encoded video data. Typically, due to the higher encoding rate used to generate the encoded video data stored in the first buffer 42, the encoded video data in the first buffer 42 will be of a greater size than the corresponding encoded video data encoded at the lower encoding rate stored in the second video buffer 43. Preferably the video data is encoded using H.623 encoding, although it should be understood that any suitable video encoding technique could be used, such as MPEG or the like.

Also provided within the server 40 is an audio data buffer 44 which is provided to store encoded audio data. Please note that in the preferred embodiment audio data is only encoded at a single encoding rate, and hence there is only the requirement for a single audio buffer. Preferably the audio data is encoded using AMR audio encoding, although any other suitable audio encoding techniques such as MP3 or the like may be used.

As well as the server 40, in the preferred embodiment a client computer 50 is also provided, which comprises a video buffer 52 and an audio buffer 54. The video buffer 52 is arranged to receive and store encoded video data which is received from the server 40. The video buffer 52 stores the received encoded video data until a video decoder provided in the client computer retrieves the encoded video data therefrom for decoding and reproduction of the video signal encoded therein. Similarly, the audio buffer 54 receives encoded audio data transmitted from the server 40, buffers the encoded audio data until such time as an audio decoder provided in the client computer retrieves the encoded audio data therefrom for decoding and reproduction of the audio signal encoded therein.

In order to provide for data communications between the server computer and the client computer a first user datagram protocol (UDP) connection 10 is provided between the server 40 and the client 50 along which encoded video data is transmitted from the server 40. Similarly, a second UDP connection 20 is also provided from the server 40 to the client 50 along which encoded audio data is transmitted. The transmission rates of the respective UDP connections 10 and 20 are controlled by the server in a manner to be described later.

In addition to the UDP connections between the server and the client, in the preferred embodiment a transport control protocol (TCP) connection 30 is established between the client and the server in order to provide for the transmission of control messages principally from the client back to the server in order to allow for effective control of the transmission rate of the two UDP connections 10 and 20. Further details of the feedback data transmitted from the client to the server over the TCP connection will be discussed later.

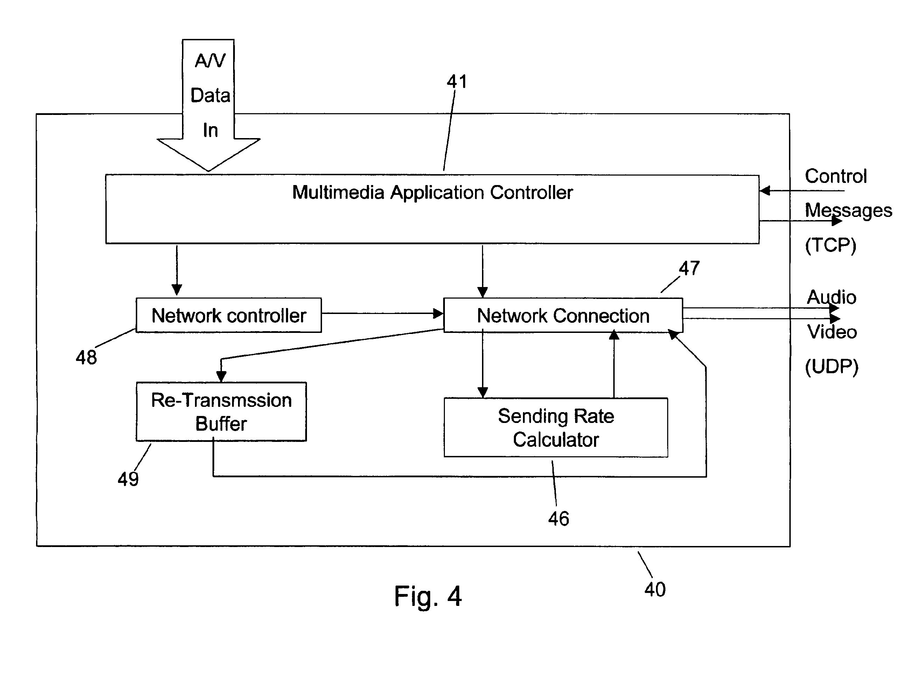

Turning now to Figure 4, Figure 4 illustrates in block diagram form the elements required within the preferred embodiment of the invention within the server computer 40. It should be noted that Figure 4 illustrates only those components of the server which are necessary for the operation of the present invention, and does not illustrate those other elements of a server system which are necessary for operation, it being understood that the intended reader being a man skilled in the art will recognise which additional elements of a server system are required for full operation.

In the preferred embodiment, the server computer 40 comprises a multimedia application controller 41 which is arranged to received encoded audio data and encoded video data and to buffer the received data therein in the buffers 42, 43 and 44 as previously described with respect to Figure 3. Please note that these buffers are not shown on Figure 4 for the sake of clarity. The multimedia application controller 41 sends and receives control messages via the TCP connection 30 to and from the client computer 50. Furthermore, the multimedia application controller provides encoded video data and encoded audio data from the appropriate buffers to the network connection module 47 which packetises the data for transmission across a network to the client computer. Therefore, the network connection module 47 operates to receive the encoded audio and video data from the multimedia application controller, packetises the data into a form suitable for transmission, and transmits the data packets on to the network in two respect UDP data streams at appropriate respective sending rates. The respective sending rates of the data streams are calculated by a sending rate calculator 46 in accordance with a suitable transmission rate formula which is discussed later. The sending rate calculator 46 passes the calculated sending rates for the audio and video data streams to the network connection module 47 in order to inform the network connection module 47 of the calculated transmission rates. In the preferred embodiment the input data to the transmission rate formula calculated in the sending rate calculator 46 is obtained over the TCP connection from the client computer to the multimedia application controller, from where it is passed to the sending rate calculator via a network connection.

A network controller module 48 is further provided in order to control the network connection 47 to perform appropriate data packetisation procedures in order to permit the audio and video data to be transmitted on to the network.

Furthermore, a retransmission buffer 49 being a memory or the like is further provided arranged to receive data packets from the network connection 47 together with appropriate control signals, and to buffer the received data packets therein in the event that the network connection 47 has to retransmit the buffered packets. The buffering and retransmission of sent data packets is not relevant to the present invention, and hence no further details will be elucidated herein.

Although not shown in Figure 4, it should further be noted that the server computer 40 further includes at least one computer-readable storage medium which stores a computer program which controls the operation of the server computer to perform the invention. The computer-readable storage medium may be of any known type, and in particular may be formed from any one of or a combination of an optical disk, a magnetic disk, a magneto-optical disk, a solid state computer memory, or any other suitable data storage medium.

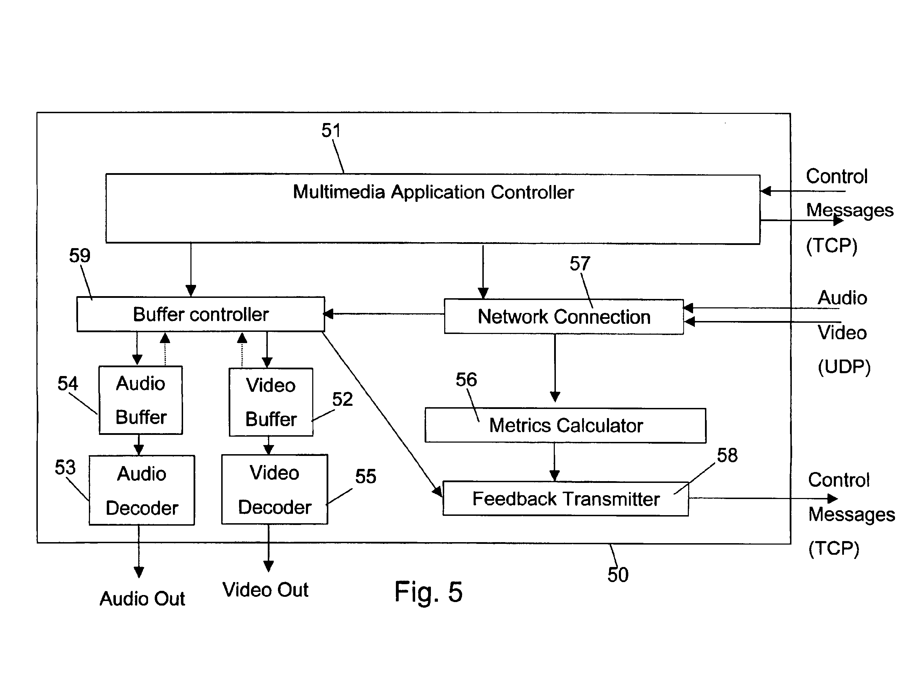

Figure 5 is a block diagram of the functional elements of the client computer 50 required in the preferred embodiment of the invention. As with the server computer 40, it should be understood that Figure 5 does not illustrate all of the necessary components of the client computer 50 for operation, but only those functional block elements which are required for the operation of the preferred embodiment of the present invention. The intended reader being a man skilled in the art should understand which additional components of the client computer are required for full operation.

Within the client computer 50 a multimedia application controller 51 is provided which corresponds to the multimedia application controller 41 provided in the server. The multimedia application controller 51 provides high level control of the multimedia application running in the client computer 50, and communicates with the corresponding multimedia application controller 41 in the server via control messages passed over the TCP connection 30. Similarly, the multimedia application controller 51 provides control signals to the other functional elements of the client computer 50 which constitute the preferred embodiment.

Further provided within the client computer 50 is a network connection module 57 which is arranged to receive data packets from the network in two or more data streams. Control information concerning the received data in the two or more data streams is passed to a metrics calculator 56 for calculation of quantitative values indicative of certain characteristics of the received data streams, and the calculated quantitative values are passed to a feedback transmitter 58 for transmission back over the network as control messages over the TCP connection 30. Further information on the calculation of the quantitative values is given later.

The network connection 57 receives the audio and video data streams, and retrieves the encoded audio and video data from the packets in each stream. The encoded audio and video data is then passed to a buffer controller 59 which feeds the received encoded audio data into the audio buffer 54, and the received encoded video data into the video buffer 52. The buffer controller 59 is further arranged to monitor the state of the audio buffer 54 and the video buffer 52 to determine how full each buffer is, and the rate at which each buffer empties, which is indicative of the decoding rate of the data stored therein. An audio decoder 53 is further provided which reads encoded audio data from the audio buffer 54, and decodes the encoded audio data to provide decoded audio data as an output. Similarly, a video decoder 55 is provided which takes encoded video data from the video buffer 52, and decodes the encoded video data to provide a video output signal.

The buffer controller 59, upon receipt of the information concerning the state of the audio and video buffers passes this information to the feedback transmitter for incorporation into the control messages passed back to the server computer over the TCP connection 30.

Although not shown in Figure 5, it should be noted that the client computer further includes at least one computer-readable storage medium which stores a computer program which controls the operation of the client computer to perform the invention. The computer-readable storage medium may be of any known type, and in particular may be formed from any one of or a combination of an optical disk, a magnetic disk, a magneto-optical disk, a solid state computer memory, or any other suitable data storage medium.

Having described the basic functional blocks forming the server apparatus and client computer apparatus of the present invention, a description of the operation of the preferred embodiment of the invention will now be described.

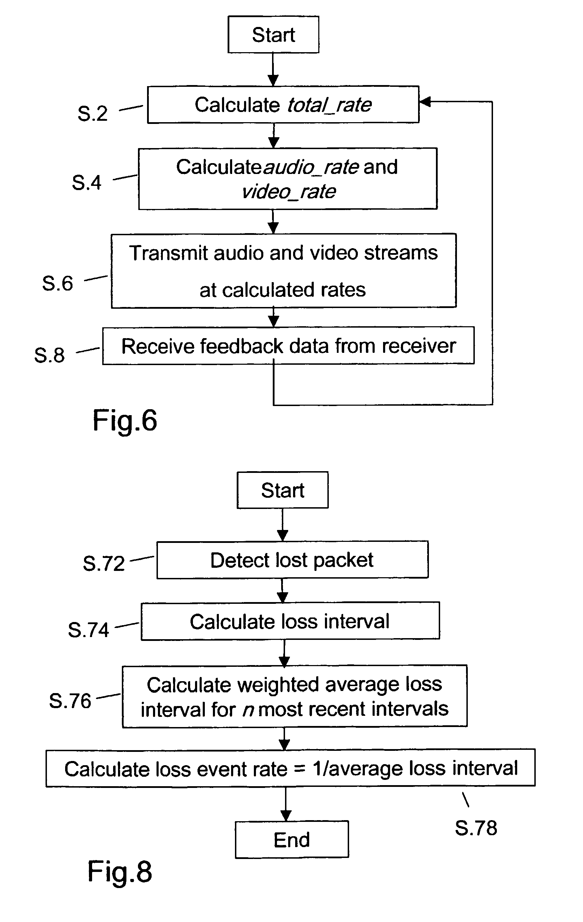

Figure 6 is a flow diagram of the steps performed by the server computer 40 in accordance with the preferred embodiment of the preset invention. Firstly, at step 2 the sending rate calculator 46 calculates the total bandwidth available for all of the individual data streams which are to be transmitted from the server computer 40. This value *total_rate* represents the upper limit on transmission rate which the individual transmission rates of each separate data stream when summed together should not be greater. The value *total rate* is calculated in accordance with the following principles.

Typically, previous multimedia conferencing applications presently used in the Internet are based on the UDP transport protocol, which as previously discussed offers no quality of service control mechanisms and is therefore incapable of performing control actions such as are required to compensate for, for example, network congestion. Thus, when network congestion occurs competing TCP connections reduce their transmission rates as described previously without any rate reduction on behalf of UDP traffic.

In order to get around this problem, in the present invention the UDP audio and video data streams are enhanced with a congestion control scheme of which the calculation of the *total rate* parameter forms a part. More particularly, the parameter *total_rate* is calculated to provide a total transmission rate which is "TCP-friendly", being a transmission rate which over time is analogous to the throughput achieved via a TCP connection.

In the preferred embodiment, the total transmission rate parameter *total_rate* is calculated using a transmission rate formula which has been derived so as to model the average throughput over time of a TCP connection, and therefore total rate is calculated so as to provide a TCP-friendly transmission rate. In the preferred embodiment we use the transmission rate formula illustrated in equation 1 below

$$bit\_rate\_stream = c\left(\frac{packet\_medium\_size}{RTT\sqrt{loss\_rate}}\right) \qquad \text{Eq.1}$$

Please note that the derivation for the above equation applied to an ubiquitous TCP connection can be found in Floyd S. "Connections with Multiple Congested Gateways in Packet Switched Networks Part 1: One Way Traffic", Computer Communications Review, volume 21, number 5, October 1991, page 30-47.

In the above equation C is a constant in the range of 0.87 to 1.31, *RTT* is the round trip time in seconds being a measure of the time it takes for a packet to transfer from a computer, across a network to another computer, and back, *loss_rate* is a measurement of packets lost at the receiver, and *packet_medium_size* is the average size of the packets to be transmitted in the stream for which the calculation is being performed. Please note that further discussion of these elements of equation 1 and how they are calculated for use in the transmission rate formula is undertaken later.

Equation 1 gives a value *bit_rate_stream* which is an estimate of the average bandwidth that a single TCP connection would achieve in the present network conditions. However, in the preferred embodiment we do not use this estimate directly as the total transmission rate for a stream, but rather this value *bit_rate_stream* is placed into equation 2 as set out below:

$$total\_rate\_stream = \min(bit\_rate\_stream, 2 * receiving\_rate\_stream)$$

$$\dots\dots\dots\text{Eq. 2}$$

The parameter *receiving_rate_stream* is received from the client computer over the TCP connection, and corresponds to the number of bits received by the client for the particular stream for which the calculation is being made in RTT seconds.

The above equation 2 gives the total bandwidth available for a single UDP stream to give TCP-friendly performance. However, in the present embodiment we are concerned with the transmission of multiple streams, and hence the above calculations must be performed separately for each stream to be transmitted. That is, both Equations 1 and 2 are applied in order to each stream (i.e. the audio and video streams in the preferred embodiment) and a value *total_rate_stream* found for each stream. The respective values thus found for each stream are then summed together to give the value *total_rate,* being the total bandwidth available to all streams to provide for TCP-friendly performance, and thereby taking into account possible network congestion.

Following the calculation of the available total transmission rate, at step S4 the sending rate calculator 46 in

**EP 1 428 358 B1**

the server calculates the individual transmission rates for each data stream, being in the preferred embodiment the transmission rate of the audio UDP stream *(audio_rate)* and the transmission rate of the video UDP stream *(video_rate)*. The values of *audio_rate* and *video_rate* are calculated as follows.

As mentioned previously with respect to Figure 3, the audio data is transmitted in a UDP stream separately from the video data which is transmitted in another UDP stream, and there are therefore two separate UDP connections one for each stream. Although it could be thought that each stream is competing for the same network bandwidth, in reality this is not true because it is not possible to send video and audio data packets at the same instant. Therefore, in the case of two data streams being audio and video streams, the previously calculated total sending bit rate can be made the equivalent of the audio sending bit rate plus the video sending bit rate. Furthermore, as will be described later, in the preferred embodiment the server is receiving information from the client about the state of the video and audio buffers, and the decoding rate for the video and audio packets. It therefore becomes possible to control the sending rates of the audio and video data streams to control the filling rate of the buffers in the client. This is achieved as follows.

Firstly, define parameters *filling_rate_audio* and *filling_rate_video,* being respectively the rates at which the audio and video buffers in the receiver fill with data. In the embodiment:

$$filling\_rate\_audio \ = \ audio\_rate \ - \ decoding\_audio\_rate \qquad \text{Eq.3}$$

and

$$filling\_rate\_video \ = \ video\_rate \ - \ decoding\_video\_rate \qquad \text{Eq. 4}$$

Assuming that control of the buffers in the receiver is required such that the buffers fill in the ratio $x{:}y$ then:

$$x(filling\_rate\_audio) \ = \ y(filling\_rate\_video) \qquad \text{Eq. 5}$$

and

$$total\_rate \ = \ audio\_rate \ + \ video\_rate \qquad \text{Eq. 6}$$

Performing appropriate substitutions and solving for *audio_rate* and *video_rate* respectively, then gives:

$$audio\_rate = \frac{y\big(total\_rate - decoding\_video\_rate\big) + x\big(decoding\_audio\_rate\big)}{x + y}$$

$$....\text{Eq.7}$$

$$video\_rate = \frac{x\big(total\_rate - decoding\_audio\_rate\big) + y\big(decoding\_video\_rate\big)}{x + y}$$

$$.....\text{Eq.8}$$

Thus, as will be apparent from the above, it becomes possible to control the respective audio sending rates and video sending rates to trade bit rate from one stream to the other depending upon the respective audio and video decode rates in the receiver. Furthermore, it should be noted above that the parameter *total_rate* is the value calculated previously from the application of Equations 1 and 2 to give the total available bandwidth available for the transmission of all the data streams i.e. *total_rate = total_rate_stream_1 + total_rate_stream_2+..... + total_rate_stream_n* wherein n is the number of data streams being transmitted simultaneously.

Returning to Figure 6, after the calculation of the audio and video sending rates for each stream, at step S6 the network connection 47 in the server transmits the audio and video streams as separate UDP data streams, at the calculated audio and video sending rates. It should be noted that as the audio and video steams are continuously transmitted, the steps of Figure 6, although depicted sequentially, are actually performed in parallel, such the transmission rates of the audio and video streams are in reality updated once new values for the audio and video transmission rates have been calculated. While the new calculations are being performed, however, these streams continue to be transmitted at the previously calculated rate.

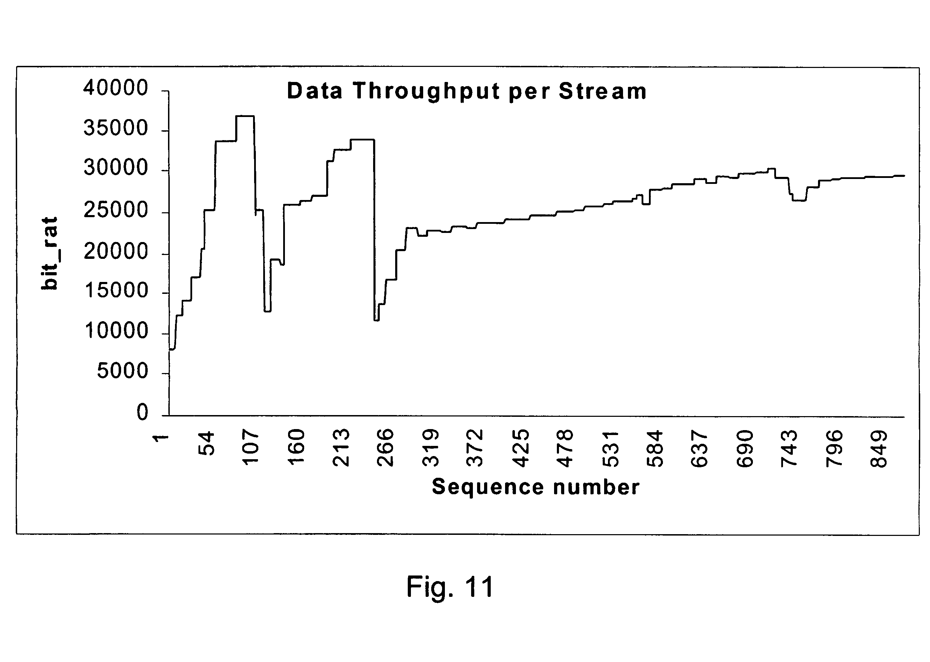

Figure 11 shows a plot of the measured transmission rate of one data stream controlled in accordance with the preferred embodiment of the present invention, when transmitting the same data as that transmitted by the TCP connection plotted in Figure 2. From Figure 11 it will be seen that after initial transient variations experienced at the opening of the session, the transmission rate of the stream steadies out, and continues with relatively little variance over time. Furthermore, when compared to the transmission rate experienced by the TCP connection shown in Figure 2 it will be seen that an almost identical average throughput is achieved as TCP, but without the large changes in transmission rate which result from TCP's multiplicative decrease control algorithm. This property of providing a smooth transmission rate with respect to time renders the present invention particularly suitable for use in transmitting data which requires continuous streaming.

At Step S8 of Figure 6 the server computer 40 receives feedback data from the client computer 50, which in the preferred embodiment is that data which is required to perform the total transmission rate and data stream transmission rate calculations of steps S2 and S4. In particular for each stream the server receives data informing it of the round trip time presently being experienced at the client, the loss rate of packets at the client, the respective decoding rates of the audio and video buffers in the client, and the data receiving rate of each data stream at the client. These quantitative values are transmitted back to the server via the TCP connection from the client.

Once updated feedback data has been received from the client, it is passed to the sending rate calculator 46 in the server, which performs the calculations in steps S2 and S4 once again, passing the results to the network connection 47, which transmits the audio and video streams with the new calculated sending rates. This process is continuous during the client session.

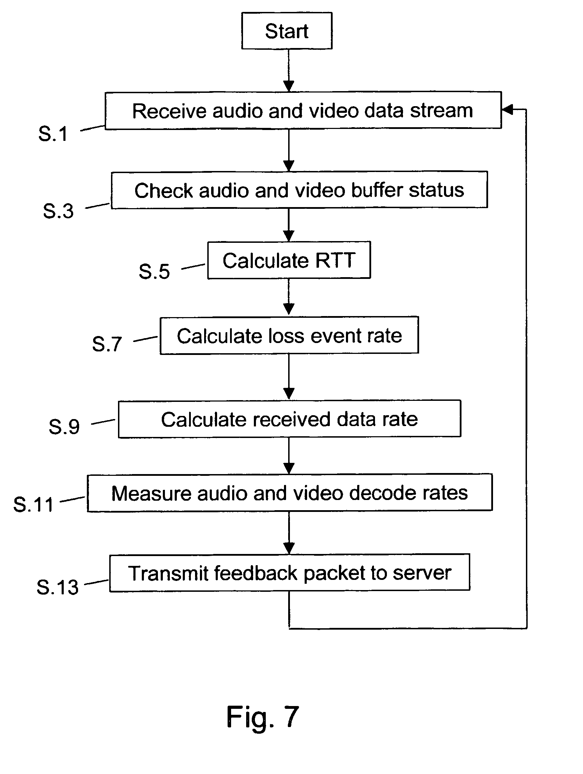

The calculation of the quantitative values passed back from the client computer to the server will now be discussed with respect to the operation of the client computer as set out in Figure 7. With reference to Figure 7, at step S1 the network connection 57 in the client computer 50 receives the separate audio and video data streams as individual UDP transmissions over the network. As described previously, the network connection 57 depacketises the encoded audio and video data from the respective UDP streams and passes the encoded video and audio data to the buffer controller 59, for buffering and subsequent decoding.

The encoded audio and video received by the buffer controller 59 is stored respectively in the audio buffer 54 and video buffer 52. At step S3 the buffer controller 59 acts to interrogate the audio buffer 54 and the video buffer 52 respectively so as to determine the status of each buffer. In particular, the buffer controller determines information as to how full each buffer is, and how quickly the encoded audio and video information in each buffer is being decoded by the respective audio and video decoders 53 and 55. This is indicative of how quickly the audio and video buffers are being emptied by the respective decoders. Once the buffer controller has determined the audio and video buffer status the determined information is passed to the feedback transmitter 58 for encapsulation into a control message for transmission back to the server computer 40.

In addition to passing the encoded audio and video data to the buffer controller, the network connection 57 also passes information concerning the received data to the metrics calculator 56 in order to allow the metrics calculator 56 to calculate the quantitative metrics values that are passed back to the server by the feedback transmitter 58. Therefore, at steps S5, S7 and S9 the metrics calculator respectively calculates for each stream the round trip time (RTT), the loss event rate, and the received data rate per stream, all of which are required at the server as input into equations 1 and 2 for calculation of the transmission rate available per data stream. It should be noted that the three metrics are calculated individually for each received data stream, such that a set of metrics is provided for each received data stream. Calculation of each of these quantitative values is discussed in turn next.

With respect to RTT, as mentioned previously RTT is a measure of the time it takes for a packet to travel from a computer, across a network to another computer, and back. RTT is therefore something measured within the metrics calculator 56 at the client computer, but in order to prevent oscillations is preferably calculated as follows:

$$RTT = 0.2 * RTT_{sample} + 0.8 * RTT_{mean} \qquad \text{Equation 9}$$

The value RTTsampte is the most recent measure of RTT measured by the metrics calculator, whereas the value RTTmean is the mean value of all previous measures of RTT.

In step S7 the metrics calculator 56 calculates the loss event rate per stream experienced at the client computer. The calculation of the loss event rate is the most complicated calculation which the metrics calculator 56 has to perform, and is dependent upon the detection of lost packets in the UDP streams from the sequence numbers of arriving packets. This detection of lost packets is performed by the network connection based upon the detection of packet sequence number in the arriving packets, wherein an expected packet is defined as lost if at least three packets with a higher sequence number than the expected packet arrive at the receiver without the expected packet having arrived. Therefore, if a packet with sequence number 5 is expected, then in the case where the next packets to arrive are packet 6, packet 7, and then packet 5, packet 5 is not defined as lost. However, if the next three packets to arrive in order are packet 7, packet 8, and packet 6 then because each of the three arrived packets have a higher sequence number than the expected packet 5, packet 5 is defined as lost.

Having specified how a packet is defined as lost as above, the metrics calculator then defines a further occurrence known as a loss event. Within the preferred embodiment, a loss event is defined as the detection of the loss of one or more packets in any RTT measurement. Therefore, if in any particular RTT measurement the packets numbered 4, 6, 7, 9, 10, and 11 arrive, then although packets 5 and 8 have been lost there has only actually been one loss event within the particular RTT measured. This method accounts for multiple packets being lost within the network at the same time, without overly affecting the total loss event rate calculation.

Once a loss event has been detected as described above, at step S74 the metrics calculator 56 calculates the most recent loss interval, being the number of packets received between the presently detected loss event and the previously detected loss event. The metrics calculator stores the newly calculated loss interval as well as the *n* most recently calculated loss intervals for application in a weighted filter to give an average loss interval value. The average loss interval value is calculated as follows.

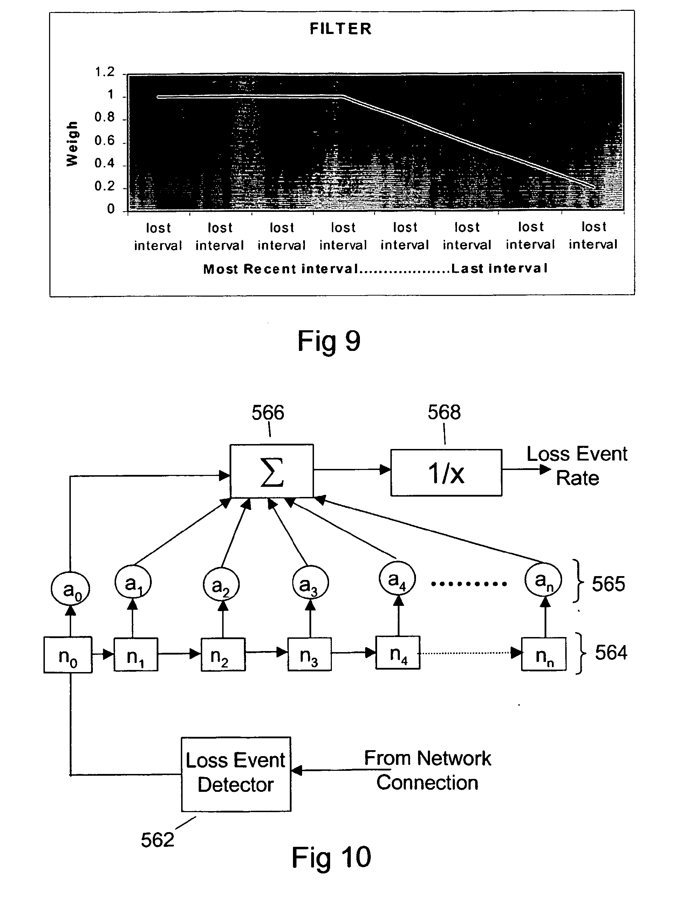

With reference to Figures 9 and 10, Figure 10 illustrates some of the functional elements which make up the metrics calculator and which are used to calculate the loss rate. More particularly, the loss event detector 562 detects loss events as described previously, and outputs the most recently calculated loss interval to the first of a number of serially-connected loss interval buffers 564. When a new loss interval is input into the first series buffer 564 the previous loss interval value held in the first buffer is shifted along to the next buffer, whose value is shifted to the next buffer in the series, and so on, as shown in Figure 10. In this way the *n* most recent loss interval values are stored for use in calculating the average loss interval value. Each loss interval value stored in the shift buffers 564 is respectively multiplied by a time-weighted loss interval co-efficient *AO* to *An,* stored in respective co-efficient stores 656. The individual values *AO* to *An* of the co-efficients are derived in accordance with a time weighted co-efficient function as shown in Figure 9, which ensures that the most recent loss intervals count towards the calculation of the average loss interval to a greater extent than historic loss intervals which have been stored from previous calculations. The purpose of the application of this time weighted filter is to ensure that the calculated loss event rate changes smoothly.

The results of the weighted loss interval calculations are summed in a summer 566, the result of which is passed to an inverter 568 for the calculation of the loss rate, being the reciprocal of the average loss interval calculated by the summer 566. The thus calculated loss rate is then passed to the feedback transmitter 58 for transmission to the server computer as described previously.

Calculation of the received data rate is also performed by the metrics calculator 56, being a straightforward measure of the number of bits received by the client in a data stream in RTT seconds. Information concerning the amount of data being received at any one time in each stream is passed from the network connection 57 to the metrics calculator 56 for calculation of the receiving rate per stream. The calculated receiving rate per stream is then passed to the feedback transmitter 58 for transmission back to the server computer as described previously.

Once the feedback transmitter 58 has received the required information from the buffer controller 59 and the metrics calculator 56, it packetises the information into a form suitable for transmission over the network in the TCP connection 30.

It should be noted that the steps S1 to S13 shown in the flow diagram of Figure 7 are for illustrative purposes only, and that the client computer 50 can in fact perform any or all of these steps in any order desired. Furthermore, it is also possible to perform several of these steps in parallel, for instance the checking and measurement of the audio and video buffers performed by the buffer controller 59 can be performed in parallel with the calculations performed by the metrics calculator 56. Please note, however, that in the preferred embodiment it is necessary for the receiver to have actually received data in the audio and video data streams in order to have information necessary to calculate the quantitative values transmitted back to the server computer.

Within the server, the actual transmission rates of each stream are controlled by the network controller 48 and the network connection 47 in combination by actually releasing packets on to the network in accordance with the calculated rates. However, in the special case of the transmission of audio and video data described in the preferred embodiment, it may be that for the video data in particular the calculated rate will not satisfy the transmission rate requirements for the particular encoding rate used. In this case, if it appears that the calculated transmission rate for the video stream has to drop such that at the present video encoding rate it will not be possible to transmit sufficient data in the video stream to prevent the video buffer at the receiver from emptying, then the network controller 48 controls the network connection 47 to take encoded video data from the low rate encoding video buffer 43 which has been encoded with a lower quality, which is more suitable for transmission across the network at the lower calculated transmission rate. At the receiver, the low rate encoded video data is placed in the video buffer and the video decoder 55 detects the lower rate of encoding and changes its own decoding rate to a lower rate, this reducing the rate at which video data is being read from the video buffer. Such measures prevent the video buffer from emptying completely, thereby permitting continuous video reproduction at the client computer.

It should be noted that because the preferred embodiment of the invention is directed towards sending audio and video data as the multiple data streams, then within the preferred embodiment the criteria for setting the respective bits rates of each stream are chosen to reflect the special requirements of audio and video data in that it has to be decoded at a receiver to reproduce the original audio and video signal. However, the present invention is not to be limited to the transmission of audio and video data as the multiple data streams and in fact almost any type of data which requires sending in multiple streams can be transmitted using the present invention. Furthermore, the particular criteria chosen to trade bit rate between these streams will depend upon the application to which the data is to be put. For example, it is possible to envisage other embodiments of the invention wherein data is transmitted in multiple streams in order to affect remote control, for example, of a remote vehicle upon which are mounted multiple sensors. Such a vehicle could be, for example, an undersea submersible exploring vehicle or the like, provided with a wireless network connection. In such a case multiple steams of data may be required to provide manoeuvre control information to the manoeuvre elements of the submarine, and to provide sensor control information to the individual sensors. The criteria by which bit rate is traded between such data streams will then differ from that required in the preferred embodiment of the invention relating to the transmission of audio and video data, and hence it should be apparent that the criteria chosen in order to control the trading of bit rate from one data stream to another is application dependent.

Furthermore, with respect to the calculation of the total transmission bandwidth available used in the present invention, within the preferred embodiment we used a transmission rate formula which is intended to simulate the average throughput obtained by a standard TCP connection. However, it should be understood that neither the particular formula nor the reason for using that formula are intended to be limitations on the present invention, and that in fact any suitable transmission rate formula can be used to calculate the total transmission rate available which is then used to calculate the individual stream transmission rates.

More particularly and as an example, where transmission is to be undertaken over an Internet protocol network then other transmission rate formulas which provide for a TCP-friendly transmission rate can be used in place of the formula used in this specific embodiment, and various other TCP-friendly formulas are presently known in the art. Furthermore, where different formulas requiring different parameters as input are used, then the client computer should be arranged to calculate and supply whatever parameters are required by the server. In the case where an IP network is not used, then the transmission rate formula chosen should preferably be one which is meaningful to whatever transport protocols are used on the particular network of interest, and which preferably provides for meaningful transmission rate control to take into account such factors as network congestion and resulting packet loss or the like. In other embodiments of the inventions it should be apparent to the skilled man what transmission rate formulas are appropriate, depending upon the particular field of application of the invention.

An example of another transmission rate formula which can be used to simulate TCP throughput, and which provides an example of other such formulas as mentioned above is described next.

The throughput equation given below is a slightly simplified version of the throughput equation for Reno TCP. Within the invention it may be used in place of equation 1 to calculate the transmission rate per stream. The throughput equation is:

$$X = \frac{s}{R \cdot \sqrt{2 \cdot b \cdot p / 3} + (t\_RTO \cdot (3 \cdot \sqrt{3 \cdot b \cdot p / 8} \cdot p \cdot (1 + 32 \cdot p^2)))} \quad \ldots \text{Equation 10}$$

Where: X is the transmit rate in bytes/second;
s is the packet size in bytes;
R is the round trip time in seconds;

p is the loss event rate, between 0 and 1.0, of the number of packet loss events as a fraction of the number of packets transmitted;

t_RTO is the TCP retransmission timeout value in seconds; and b is the number of packets acknowledged by a single TCP acknowledgement

The round trip time and loss event rate used in the above are calculated as described previously. Furthermore, we may further simplify this evaluation of the above by setting t_RTO = 4*R. A more accurate calculation of t_RTO is possible, but experiments with the current setting have resulted in reasonable fairness with existing TCP implementations. Another possibility would be to set t_RTO = max(4R, one second), to match the recommended minimum of one second on the RTO.

Within embodiments of the invention which use the above equation, as mentioned previously the above equation 10 is simply substituted for Equation 1 in the previously described embodiment. The other processing steps remain substantially the same.

## Claims

1. A method of data transmission from a transmission side (40) to a receiver side (50) across a network, comprising the steps of:

   calculating (S3) a total transmission rate for the transmission of data using a transmission rate formula;
   transmitting (S6) data onto the network for transmission to a receiver (50) in at least two separate data streams each at a respective data transmission bit rate; and
   controlling the respective data transmission rates of at least a subset of the respective data streams to trade bit-rate between said streams;
   wherein the sum of the respective transmission rates of each data stream is substantially equal to or less than the calculated total transmission rate;
   **characterised in that** said step (S3) of calculating a total transmission rate for the transmission of data is performed on the transmission side (40) prior to transmission (S6) of said data.

2. A method according to claim 1, wherein the data transmission rates of the data streams are controlled so as to prevent data buffers (52, 54) in the receiver which receive the data in the data streams from overflowing.

3. A method according to claim 1 or claim 2, wherein the controlling step further comprises the step of receiving feedback data from the receiver (50); and
   controlling the data transmission rates of at least a subset of the respective data streams in response to the received data.

4. A method according to claim 3 wherein the received feedback data is indicative of at least the decoding rate of the transmitted data in each stream received at the receiver; and the transmission rates of the controlled data streams are further controlled as a function of at least the receiver decoding rates.

5. A method according to claim 4 wherein in the case of two data streams the respective transmission rates are controlled in accordance with the equations:

$$sr\_str\_1 = \frac{y(tr - dr\_str2) + x(dr\_str1)}{x + y}$$

$$sr\_str\_2 = \frac{x(tr - dr\_str1) + y(dr\_str2)}{x + y}$$

wherein the variables relate to the following:

Sr_str_1 : sending rate of the first data stream;

Sr_str_2 : sending rate of the second data stream:

tr: the calculated total transmission rate;

dr_str1 : the decoding rate at the receiver of the data in the first data stream;

dr_str2 : the decoding rate at the receiver of the data in the second data stream;

x : a co-efficient of filling rate of a first buffer in the receiver which receives data from the first data stream ; and

y : a co-efficient of filling rate of a second buffer in the receiver which receives data from the second data stream.

**6.** A method according to any of the preceding claims wherein the total transmission rate is calculated to give an average thoughput of data over the network similar to that obtained using Transport Control Protocol (TCP).

**7.** A method according to any of the preceding claims, wherein the calculating step (S2) further comprises the steps of:

receiving (S8) feedback data from the receiver indicative of one or more of a round trip time value (RTT), a loss rate value, and/or a receiving rate value at the receiver; and

calculating the total transmission rate as a function of one or more of the received values indicated by the feedback data;

wherein the round trip time is a measure of the time it takes for data to travel from a transmitter to the receiver and back to the transmitter; the loss rate value is a measure of the amount of data transmitted to the receiver which is lost; and the receiving rate value is the number of bits received in the round trip-time.

**8.** A method according to claim 7, wherein the total transmission rate is calculated in accordance with:

$$bit\_rate\_per\_stream\_x = c \left( \frac{data\_medium\_size}{t_{RTT} \sqrt{loss_{rate}}} \right)$$

wherein:

*total_rate_stream_x* = min *(bit_rate _per_stream_x, 2xReceiving_Rate_x) where total_rate_stream_x, resresents* the bandwidth available for transmission of data in an $x^{th}$ data stream

and:

*total_rate = tota_rate_stream_1 + total_rate_stream_2+..... + total_rate_stream_n* where *total_rate* represents the upper limit on transmission rate which the individual transmission rates of each separate data stream when summed together should not exceed;

wherein $x \in \{1, 2, ....., n\}$, *data_medium_size* is a measure of the average size of the data sent across the network per stream, *c* is a constant in the range $0.87 \leq c \leq 1.31$, and n is the number of data streams to be transmitted.

**9.** A method according to any of the preceding claims, wherein the data transmitted in at least a subset of two or more of the data streams is related.

**10.** A method according to claim 9, wherein at least one of said data streams contains real-time data of a first type, and one or more other of said data streams contains real-time data of a second type related to said data of said first type.

**11.** A method of data transmission comprising generating a plurality of data streams then transmitting said data streams over a network using a method of data transmission according to any of claims 1 to 10.

**12.** A system for data transmission from a transmission side (40) to a receiver side (50) across a network, comprising:

transmission rate calculation means (46) for calculating a total transmission rate for the transmission of data using a transmission rate formula;

data stream transmission means (47, 49) for transmitting data onto the network for transmission to a receiver in at least two separate data streams each at a respective data transmission bit rate; and

data stream controlling means (48) for controlling the respective data transmission rates of at least a subset of the respective data streams to trade bit-rate between said streams;
wherein the data stream controlling means is further operable such that the sum of the respective transmission rates of each data stream is controlled to be substantially equal to or less than the calculated total transmission rate;
**characterised in that** said transmission rate calculation means (46) is arranged to calculate said total transmission rate on the transmission side prior to transmission of said data.

13. A system according to claim 12, wherein the data stream controlling means (48) is further arranged to control the data transmission rates of the data streams so as to prevent data buffers (52, 54) in the receiver which receives the data in the data streams from overflowing.

14. A system according to any of claims 12 or 13, further comprising data receiving means (41) for receiving feedback data from the receiver (50); wherein the data stream controlling means (48) is further arranged to control the data transmission rates of at least a subset of the respective data streams in response to the received data.

15. A system according to claim 14 wherein the received feedback data is indicatives of at least the decoding rate of the transmitted data in each stream received at the receiver (50); and the data stream controlling means (48) is further arranged to control the transmission rates of the controlled data streams as a function of at least the receiver decoding rates.

16. A system according to claim 15 wherein in the case of two data streams the respective transmission rates are controlled in accordance with the equations:

$$sr\_str\_1 = \frac{y(tr - dr\_str2) + x(dr\_str1)}{x + y}$$

$$sr\_str\_2 = \frac{x(tr - dr\_str1) + y(dr\_str2)}{x + y}$$

wherein the variables relate to the following:

Sr_str_1 : Sending rate of the first data stream;
Sr_str_2 : sending rate of the second date stream:
tr: the calculated total transmission rate;
dr_str1 : the decoding rate at the receiver of the data in the first data stream;
dr_str2 : the decoding rate at the receiver of the data in the second data stream;
x : a co-efficient of filling rate of a first buffer in the receiver which receives data from the first data stream ; and
y : a co-efficient of filling rate of a second buffer in the receiver which receives data from the second data stream.

17. A system according to any of claims 12 to 16, wherein the total transmission rate is calculated to give an average thoughput of data over the network similar to that obtained using Transport Control Protocol (TCP).

18. A system according to any of claims 12 to 17, further comprising:

data receiving means (41) for receiving feedback data from the receiver indicative of one or more of a round trip time value (RTT), a loss rate value, and/or a receiving rate value at the receiver; and wherein the transmission rate calculation means (46) is further arranged to calculate the total transmission rate as a function of one or more of the received values indicated by the feedback data;
wherein the round trip time is a measure of the time it takes for data to travel from a transmitter (40) to the receiver (50) and back to the transmitter; the loss rate value is a measure of the amount of data transmitted to the receiver which is lost; and the receiving rate value is the number of bits received in the round trip-time.

**19.** A system according to claim 18, wherein the total transmission rate is calculated in accordance with:

$$bit\_rate\_per\_stream\_x = c\left(\frac{data\_medium\_size}{t_{RTT}\sqrt{loss_{rate}}}\right)$$

wherein:

total_rate stream_x= min (bit_rate_per_stream_x, 2xReceiving_Rate_x) where total_rate_stream_x, resresents the bandwidth available for transmission of data in an $x^{th}$ data stream
and:

total_rate = total_rate_stream_1 + total_rate_stream_2+..... + total_rate_stream_n where total_rate represents the upper limit on transmission rate which the individual transmission rates of each separate data stream when summed together should not exceed;
wherein x ∈ {1, 2, ....., n}, data_medium_size is a measure of the average size of the data sent across the network, c is a constant in the range $0.87 \le c \le 1.31$, and n is the number of data streams to be transmitted.

**20.** A system according to any of claims 12 to 19, wherein the data transmitted in at least two or more of the data streams is related.

**21.** A system according to claim 20, wherein at least one of said data streams contains real-time data of a first type and one or more other of said data streams contains real-time data of a second type related to said data of said first type.

**22.** A computer readable storage medium storing a computer program which when run on a computer controls the computer to perform a method according to any of claims 1 to 11

**23.** A method of receiving data from a network, the data having been transmitted according to a transmission method as claimed in any of claims 1 to 11, the method comprising the steps of:

receiving (S1) at least two separate data streams each at a respective data transmission rate;
passing the received data in each stream to a respective data buffer for buffering therein;
calculating (S5, S7, S9) one or more quantitative values indicative of one or more characteristics of the received data; and
transmitting (S13) the calculated quantitative values to a transmitter (50) for use in calculating the total transmission rate for data transmitted therefrom.

**24.** A method according to claim 23, further comprising the step of:

decoding the data in each buffer at a respective decoding rate;
wherein the respective data decoding rates are transmitted to the transmitter as at least one of the calculated quantitative values.

**25.** A method according to claim 23 or 24, wherein the calculating step (S5, S7, S9) further comprises calculating one or more of a round trip time value (RTT), a loss rate value, and/or a receiving rate value as the one or more quantitative values, wherein the round trip time is a measure of the time it takes for data to travel from a, transmitter (40) to a receiver (50) and back to the transmitter; the loss rate value is a measure of the amount of data transmitted to a receiver which is lost; and the receiving rate value is the number of bits received by the receiver in the round trip time.

**26.** A method according to claim 25, wherein the loss event rate is calculated using a weighted filter of the n most recent loss intervals, being the output of data received between two loss events.

**27.** A system for receiving data from a network, the data having been transmitted according to transmission system as claimed in any of claims 12 to 21, the system comprising:

data receiving means (57) for receiving at least two separate data streams each at a respective data transmission rate;

at least two data buffers (52, 54) arranged to receive data therein from the respective received data streams;

calculation means (56) for calculating one or more quantitative values indicative of one or more characteristics of the received data; and

data transmission means (58) for transmitting the calculated quantitative values to a transmitter (40) for use in calculating the total transmission rate for data transmitted therefrom.

**28.** A system according to claim 27, further comprising data decoding means (53, 55) for decoding the data in each buffer (52,54) at a respective decoding rate;

wherein the respective data decoding rates are transmitted to the transmitter as at least one of the calculated quantitative values.

**29.** A system according to claim 27 or 28 wherein the calculation means (56) are further operable to calculate one or more of a round trip time value (RTT), a loss rate value, and/or a receiving rate value as the one or more quantitative values, wherein the round trip time is a measure of the time it takes for data to travel from a transmitter (40) to a receiver (50) and back to the transmitter; the loss rate is a measure of the amount of data transmitted to a receiver which is lost; and the receiving rate value is the number of bits received by the receiver in the round-trip-time.

**30.** A system according to claim 29, wherein the calculation means (56) further comprises a weighted filter means for calculating the loss event rate using a weighted filter of the n most recent loss intervals, being the amount of data received between two loss events.

**31.** A computer-readable storage medium storing a computer program which when run on a computer controls the computer to perform the method of claims 23 to 26.

## Patentansprüche

**1.** Verfahren zum Senden von Daten von einer Sendeseite (40) zu einer Empfängerseite (50) über ein Netz, das die folgenden Schritte umfasst:

Berechnen (S3) einer Gesamtsenderate für das Senden von Daten unter Verwendung einer Senderatenformel;

Senden (S6) von Daten in das Netz, um sie zu einem Empfänger (50) zu senden, in wenigstens zwei getrennten Datenströmen, wovon jeder eine jeweilige Datensende-Bitrate besitzt; und

Steuern der jeweiligen Datensenderaten wenigstens einer Untermenge der jeweiligen Datenströme, um die Bitrate zwischen den Strömen auszuhandeln;

wobei die Summe der jeweiligen Senderaten jedes Datenstroms im Wesentlichen gleich oder kleiner als die berechnete Gesamtsenderate ist;

**dadurch gekennzeichnet, dass** der Schritt (S3) des Berechnens einer Gesamtsenderate für das Senden von Daten auf der Sendeseite (40) vor dem Senden (S6) der Daten ausgeführt wird.

**2.** Verfahren nach Anspruch 1, wobei die Datensenderaten der Datenströme in der Weise gesteuert werden, dass verhindert wird, dass Datenpuffer (52, 54) in dem Empfänger, die die Daten in den Datenströmen empfangen, überlaufen.

**3.** Verfahren nach Anspruch 1 oder Anspruch 2, wobei der Steuerschritt ferner den Schritt des Empfangens von Rückkopplungsdaten von dem Empfänger (50) umfasst; und

das Steuern der Datensenderaten wenigstens einer Untermenge der jeweiligen Datenströme in Reaktion auf die empfangenen Daten erfolgt.

**4.** Verfahren nach Anspruch 3, wobei die empfangenen Rückkopplungsdaten wenigstens die Decodierungsrate der gesendeten Daten in jedem bei dem Empfänger empfangenen Strom angeben; wobei die Senderaten der gesteuerten Datenströme ferner als Funktion wenigstens der Empfängerdecodierungsraten gesteuert werden.

**5.** Verfahren nach Anspruch 4, wobei im Fall von zwei Datenströmen die jeweiligen Senderaten in Übereinstimmung mit den folgenden Gleichungen gesteuert werden:

$$sr \_ str \_ 1 = \frac{y(tr - dr \_ str2) + x(dr \_ str1)}{x + y}$$

$$sr \_ str \_ 2 = \frac{y(tr - dr \_ str1) + x(dr \_ str2)}{x + y}$$

wobei sich die Variablen auf Folgendes beziehen:

*Sr_str_1:* Senderate des ersten Datenstroms;
*Sr_str_2:* Senderate des zweiten Datenstroms;
*tr:* berechnete Gesamtsenderate;
*dr_str1:* Decodierungsrate beim Empfänger der Daten in dem ersten Datenstrom;
*dr_str2:* Decodierungsrate beim Empfänger der Daten in dem zweiten Datenstrom;
*x*: Koeffizient einer Befüllungsrate eines ersten Puffers in dem Empfänger, der Daten aus dem ers- ten Datenstrom empfängt; und
*y*: Koeffizient einer Befüllungsrate eines zweiten Puffers in dem Empfänger, der Daten aus dem zwei- ten Datenstrom empfängt.

**6.** Verfahren nach einem der vorhergehenden Ansprüche, wobei die Gesamtsenderate berechnet wird, um einen durchschnittlichen Durchsatz von Daten durch das Netz ähnlich jenem, der unter Verwendung des Transport Control Protocol (TCP) erhalten wird, bereitzustellen.

**7.** Verfahren nach einem der vorhergehenden Ansprüche, wobei der Berechnungsschritt (S2) ferner die folgenden Schritte umfasst:

Empfangen (S8) von Rückkopplungsdaten von dem Empfänger, die einen Umlaufzeitwert (RTT) und/oder einen Verlustratenwert und/oder einen Empfangsratenwert bei dem Empfänger angeben; und
Berechnen der Gesamtsenderate als Funktion eines oder mehrerer der empfangenen Werte, die von den Rückkopplungsdaten angegeben werden;
wobei die Umlaufzeit ein Maß für die Zeit ist, die Daten benötigen, um von einem Sender zu dem Empfänger und zurück zum Sender zu laufen; der Verlustratenwert ein Maß für die Menge von Daten ist, die zu dem Empfänger gesendet werden und verloren gehen; und der Empfangsratenwert die Anzahl von Bits ist, die in der Umlaufzeit empfangen wird.

**8.** Verfahren nach Anspruch 7, wobei die Gesamtsenderate in Übereinstimmung mit der folgenden Formel berechnet wird:

$$bit \_ rate \_ per \_ stream \_ x = c\left(\frac{data \_ medium - size}{t_{RTT}\sqrt{loss_{rate}}}\right)$$

wobei:

*total_rate_stream_x* = **min***(bit_rate_per_stream_x, 2xReceiving_Rate_x),* wobei *total_rate_stream_x* die Bandbreite repräsentiert, die für das Senden von Daten in einem x-ten Datenstrom verfügbar ist
und
*total_rate = total rate stream* 1 + *total rate stream 2* + ... + *total_rate_stream_n,* wobei *total_rate* die obere Grenze der Senderate repräsentiert, die die einzelnen Senderaten jedes separaten Datenstroms, wenn aufsummiert, nicht übersteigen sollten;
wobei x ∈ {1, 2, ..., n}, *data_medium_size* ein Maß für die durchschnittliche Größe der über das Netz gesendeten Daten pro Strom ist, c eine Konstante im Bereich von 0,87 ≤ *c* ≤ 1,31 ist und n die Anzahl der zu sendenden Datenströme ist.

9. Verfahren nach einem der vorhergehenden Ansprüche, wobei die Daten, die in wenigstens einer Untermenge von zwei oder mehr der Datenströme gesendet werden, verwandt sind.

10. Verfahren nach Anspruch 9, wobei wenigstens einer der Datenströme Echtzeitdaten eines ersten Typs enthält und ein oder mehrere andere der Datenströme Echtzeitdaten eines zweiten Typs, die mit den Daten des ersten Typs verwandt sind, enthalten.

11. Verfahren zum Senden von Daten, das das Erzeugen mehrerer Datenströme und dann das Senden der Datenströme über ein Netz unter Verwendung eines Datensendeverfahrens nach einem der Ansprüche 1 bis 10 umfasst.

12. System zum Senden von Daten von einer Sendeseite (40) zu einer Empfängerseite (50) über ein Netz, das umfasst:

Senderaten-Berechnungsmittel (46), um eine Gesamtsenderate für das Senden von Daten unter Verwendung einer Senderatenformel zu berechnen;
Datenstrom-Sendemittel (47, 49) für das Senden von Daten in das Netz, um sie zu einem Empfänger zu senden, in wenigstens zwei getrennten Datenströmen, wobei jeder eine jeweilige Datensende-Bitrate besitzt; und
Datenstrom-Steuermittel (48) zum Steuern der jeweiligen Datensenderaten wenigstens einer Untermenge der jeweiligen Datenströme, um Bitraten zwischen den Strömen auszuhandeln;
wobei die Datenstrom-Steuermittel ferner betreibbar sind, um die Summe der jeweiligen Senderaten jedes Datenstroms so zu steuern, dass sie im Wesentlichen gleich oder kleiner als die berechnete Gesamtsenderate ist;
**dadurch gekennzeichnet, dass** die Senderaten-Berechnungsmittel (46) dazu ausgelegt sind, die Gesamtsenderate auf der Sendeseite vor dem Senden der Daten zu berechnen.

13. System nach Anspruch 12, wobei die Datenstrom-Steuermittel (48) ferner dazu ausgelegt sind, die Datensenderate der Datenströme so zu steuern, dass verhindert wird, dass Datenpuffer (52, 54) in dem Empfänger, der die Daten in den Datenströmen empfängt, überlaufen.

14. System nach einem der Ansprüche 12 oder 13, das ferner Datenempfangsmittel (41) umfasst, um Rückkopplungsdaten von dem Empfänger (50) zu empfangen; wobei die Datenstrom-Steuermittel (48) ferner dazu ausgelegt sind, die Datensenderaten wenigstens einer Untermenge der jeweiligen Datenströme in Reaktion auf die empfangenen Daten zu steuern.

15. System nach Anspruch 14, wobei die empfangenen Rückkopplungsdaten wenigstens die Decodierungsrate der gesendeten Daten in jedem Strom, die bei dem Empfänger (50) empfangen werden, angeben; und die Datenstrom-Steuermittel (48) ferner dazu ausgelegt sind, die Senderaten der gesteuerten Datenströme als Funktion wenigstens der Empfängerdecodierungsraten zu steuern.

16. System nach Anspruch 15, wobei im Fall von zwei Datenströmen die jeweiligen Senderaten in Übereinstimmung mit den folgenden Gleichungen gesteuert werden:

$$Sr\_str\_1 = \frac{y(tr - dr\_str1) + x(tr - dr\_str1)}{x + y}$$

$$Sr\_str\_2 = \frac{y(tr - dr\_str2) + x(tr - dr\_str2)}{x + y}$$

wobei sich die Variablen auf Folgendes beziehen:

*Sr_str_1:* Senderate des ersten Datenstroms;
*Sr_str_2:* Senderate des zweiten Datenstroms;
*tr:* berechnete Gesamtsenderate;
*dr_str1:* Decodierungsrate beim Empfänger der Daten in dem ersten Datenstrom;
*dr_str2:* Decodierungsrate beim Empfänger der Daten in dem zweiten Datenstrom;

*x*: Koeffizient einer Befüllungsrate eines ersten Puffers in dem Empfänger, der Daten aus dem ers- ten Datenstrom empfängt; und

*y*: Koeffizient einer Befüllungsrate eines zweiten Puffers in dem Empfänger, der Daten aus dem zwei- ten Datenstrom empfängt.

**17.** System nach einem der Ansprüche 12 bis 16, wobei die Gesamtsenderate berechnet wird, um einen durchschnittlichen Durchsatz von Daten über das Netz ähnlich jenem, der unter Verwendung des Transport Control Protocol (TCP) erhalten wird, bereitzustellen.

**18.** System nach einem der Ansprüche 12 bis 17, das ferner umfasst:

Datenempfangsmittel (41), um Rückkopplungsdaten von dem Empfänger zu empfangen, die einen Umlaufzeitwert (RTT) und/ oder einen Verlustratenwert und/oder einen Empfangsratenwert bei dem Empfänger angeben; und wobei die Senderaten-Berechnungsmittel (46) ferner dazu ausgelegt sind, die Gesamtsenderate als eine Funktion eines oder mehrerer der empfangenen Werte, die durch die Rückkopplungsdaten angegeben werden, zu berechnen;

wobei die Umlaufzeit ein Maß für die Zeit ist, die Daten benötigen, um von einem Sender (40) zu dem Empfänger (50) und zurück zu dem Sender zu laufen; der Verlustratenwert ein Maß für die Menge von Daten ist, die zu dem Empfänger gesendet werden und verloren gehen; und der Empfangsratenwert die Anzahl von Bits ist, die in der Umlaufzeit empfangen werden.

**19.** System nach Anspruch 18, wobei die Gesamtsenderate in Übereinstimmung mit der folgenden Formel berechnet wird:

$$total\_rate\_stream\_x = c \left( \frac{data\_medium\_size}{\sqrt{loss}} \right)$$

wobei:

*total_rate_stream_x = min(bit_rate_per_stream_x, 2xReceiving_Rate_x),* wobei *total_rate_stream_x* die Bandbreite repräsentiert, die für das Senden von Daten in einem x-ten Datenstrom verfügbar ist und

*total_rate = total rate stream 1 + total_rate_stream_2 + ... + total_rate_stream_n,* wobei *total_rate* die obere Grenze der Senderate repräsentiert, die die einzelnen Senderaten jedes separaten Datenstroms, wenn aufsummiert, nicht übersteigen sollten;

wobei $x \in \{1, 2, ..., n\}$, *data_medium_size* ein Maß für die durchschnittliche Größe der über das Netz gesendeten Daten pro Strom ist, c eine Konstante im Bereich von $0{,}87 \le c \le 1{,}31$ ist und n die Anzahl der zu sendenden Datenströme ist.

**20.** System nach einem der Ansprüche 12 bis 19, wobei die Daten, die in wenigstens zwei oder mehr der Datenströme gesendet werden, verwandt sind.

**21.** System nach Anspruch 20, wobei wenigstens einer der Datenströme Echtzeitdaten eines ersten Typs enthält und einer oder mehrere andere der Datenströme Echtzeitdaten eines zweiten Typs, die mit den Daten des ersten Typs verwandt sind, enthalten.

**22.** Computerlesbares Speichermedium, das ein Computerprogramm speichert, das dann, wenn es auf einem Computer ausgeführt wird, den Computer steuert, um ein Verfahren nach einem der Ansprüche 1 bis 11 auszuführen.

**23.** Verfahren zum Empfangen von Daten von einem Netz, wobei die Daten in Übereinstimmung mit einem Sendeverfahren nach einem der Ansprüche 1 bis 11 gesendet worden sind, wobei das Verfahren die folgenden Schritte umfasst:

Empfangen (S1) von wenigstens zwei getrennten Datenströmen, wovon jeder eine jeweilige Datensenderate besitzt;

Leiten der empfangenen Daten in jedem Strom zu einem jeweiligen Datenpuffer, um sie darin zu puffern;
Berechnen (S5, S7, S9) eines oder mehrerer quantitativer Werte, die eine oder mehrere Charakteristiken der empfangenen Daten angeben; und
Senden (S13) der berechneten quantitativen Werte zu einem Sender (50) zur Verwendung bei der Berechnung der Gesamtsenderate für die von hier gesendeten Daten.

24. Verfahren nach Anspruch 23, das ferner den folgenden Schritt umfasst:

Decodieren der Daten in jedem Puffer mit einer jeweiligen Decodierungsrate;
wobei die jeweiligen Datendecodierungsraten zu dem Sender als wenigstens einer der berechneten quantitativen Werte gesendet werden.

25. Verfahren nach Anspruch 23 oder 24, wobei der Berechnungsschritt (S5, S7, S9) ferner das Berechnen eines Umlaufzeitwerts (RTT) und/oder eines Verlustratenwerts und/oder eines Empfangsratenwerts als einen oder mehrere quantitative Werte umfasst, wobei die Umlaufzeit ein Maß für die Zeit ist, die Daten benötigen, um sich von einem Sender (40) zu einem Empfänger (50) und zurück zu dem Sender zu bewegen; der Verlustratenwert ein Maß für die Menge von Daten ist, die zu einem Empfänger gesendet werden und die verloren gehen; und der Empfangsratenwert die Anzahl von Bits ist, die von dem Empfänger in der Umlaufzeit empfangen wird.

26. Verfahren nach Anspruch 25, wobei die Verlustereignisrate unter Verwendung eines gewichteten Filters der n jüngsten Verlustintervalle berechnet wird, die die Datenausgabe ist, die zwischen zwei Verlustereignissen empfangen wird.

27. System zum Empfangen von Daten von einem Netz, wobei die Daten in Übereinstimmung mit einem Sendesystem nach einem der Ansprüche 12 bis 21 gesendet worden sind, wobei das System umfasst:

Datenempfangsmittel (57) zum Empfangen von wenigstens zwei getrennten Datenströmen, wovon jeder eine jeweilige Datensenderate besitzt;
wenigstens zwei Datenpuffer (52, 54), die dazu ausgelegt sind, Daten von den jeweiligen empfangenen Datenströmen zu empfangen;
Berechnungsmittel (56), um einen oder mehrere quantitative Werte, die eine oder mehrere Charakteristiken der empfangenen Daten angeben, zu berechnen; und
Datensendemittel (58), um die berechneten quantitativen Werte zu einem Sender (40) zur Verwendung bei der Berechnung der Gesamtsenderate für von hier gesendete Daten zu senden.

28. System nach Anspruch 27, das ferner Datendecodierungsmittel (53, 55) zum Decodieren der Daten in jedem Puffer (52, 54) mit einer jeweiligen Decodierungsrate umfasst;
wobei die jeweiligen Datendecodierungsraten zu dem Sender als wenigstens einer der berechneten quantitativen Werte gesendet werden.

29. System nach Anspruch 27 oder 28, wobei die Berechnungsmittel (56) ferner betreibbar sind, um einen Umlaufzeitwert (RTT) und/oder einen Verlustratenwert und/oder einen Empfangsratenwert als den einen oder die mehreren quantitativen Werte zu berechnen, wobei die Umlaufzeit ein Maß für die Zeit ist, die Daten benötigen, um von einem Sender (40) zu einem Empfänger (50) und zurück zu dem Sender zu laufen; die Verlustrate ein Maß für die Menge von Daten ist, die zu einem Empfänger gesendet werden und die verloren gehen; und der Empfangsratenwert die Anzahl von Bits ist, die von dem Empfänger in der Umlaufzeit empfangen werden.

30. System nach Anspruch 29, wobei die Berechnungsmittel (56) ferner ein gewichtetes Filtermittel enthalten, um die Verlustereignisrate unter Verwendung eines gewichteten Filters der n jüngsten Verlustintervalle zu berechnen, die eine Datenmenge ist, die zwischen zwei Verlustereignissen empfangen wird.

31. Computerlesbares Speichermedium, das ein Computerprogramm speichert, das, wenn es auf einem Computer abläuft, den Computer steuert, um das Verfahren nach den Ansprüchen 23 bis 26 auszuführen.

**Revendications**

1. Procédé de transmission de données, d'un côté émission (40) à un côté récepteur (50) sur un réseau, comprenant les étapes consistant à :

calculer (S3) un débit de transmission total pour la transmission de données en utilisant une formule de débit de transmission ;

transmettre (S6) des données sur le réseau pour transmission à un récepteur (50), en au moins deux flots de données séparés, à un débit binaire de transmission respectif ; et

commander les débits de transmission de données respectifs d'au moins un sous-ensemble des flots de données respectifs, de manière à négocier un débit binaire entre lesdits flots;

dans lequel la somme des débits de transmission respectifs de chaque flot de données est sensiblement identique ou inférieure au débit de transmission total calculé ;

**caractérisé en ce que** ladite étape (S3) de calcul d'un débit de transmission total pour la transmission de données est accomplie sur le côté émission (40) avant la transmission (S6) desdites données.

2. Procédé selon la revendication 1, dans lequel les débits de transmission de données des flots de données sont commandés de manière à empêcher que des tampons à données (52, 54) situés dans le récepteur qui reçoit les données dans les flots de données n'entrent en débordement.

3. Procédé selon la revendication 1 ou la revendication 2, dans lequel l'étape de commande comprend en outre l'étape de réception de données de retour de la part du récepteur (50) ; et

la commande des débits de transmission de données d'au moins un sous-ensemble des flots de données respectifs, en réponse aux données reçues.

4. Procédé selon la revendication 3, dans lequel les données de retour reçues sont indicatives d'au moins le débit de décodage des données transmises dans chaque flot de données reçu au récepteur ; et les débits de transmission des flots de données commandés sont en outre commandés en fonction d'au moins les débits de décodage au récepteur.

5. Procédé selon la revendication 4, dans lequel, dans le cas de deux flots de données, les débits de transmission respectifs sont commandés selon les équations :

$$sr\_str\_1 = \frac{y(tr - dr\_str2) + x(dr\_str1)}{x + y}$$

$$sr\_str\_2 = \frac{x(tr - dr\_str1) + y(dr\_str2)}{x + y}$$

dans lesquelles les variables sont les suivantes :

$Sr\_str\_1$ : débit d'émission du premier flot de données ;
$Sr\_str\_2$ : débit d'émission du deuxième flot de données ;
$tr$ : débit de transmission total calculé ;
$dr\_str1$ : débit de décodage au récepteur des données dans le premier flot de données ;
$dr\_str2$ : débit de décodage au récepteur des données dans le deuxième flot de données ;
$x$ : un coefficient de taux de remplissage d'un premier tampon dans le récepteur, qui reçoit des données venant du premier flot de données ; et
$y$ : un coefficient de taux de remplissage d'un deuxième tampon dans le récepteur, qui reçoit des données venant du deuxième flot de données.

6. Procédé selon l'une quelconque des revendications précédentes, dans lequel le débit de transmission total est calculé pour fournir sur le réseau un débit de données moyen similaire à celui obtenu en utilisant le Transport Control Protocol (TCP).

7. Procédé selon l'une quelconque des revendications précédentes, dans lequel l'étape de calcul (S2) comprend en outre les étapes consistant à :

recevoir (S8) du récepteur des données de retour indicatives d'une ou plusieurs parmi une valeur de temps de propagation aller et retour (round trip time - RTT), une valeur de taux de perte, et/ou une valeur de débit de réception au récepteur ; et

calculer le débit de transmission total, en fonction d'une ou plusieurs des valeurs reçues, indiquées par les données de retour ;

dans lequel le temps de propagation aller et retour est une indication quantitative du temps que prennent les données pour cheminer d'un émetteur au récepteur et retour à l'émetteur ; la valeur de taux de perte est une indication quantitative de la quantité de donnés transmise au récepteur et perdues ; et la valeur de débit de réception est le nombre de bits reçus pendant le temps de propagation aller et retour.

**8.** Procédé selon la revendication 7, dans lequel le débit de transmission total est calculé selon :

$$bit\_rate\_per\_stream\_x \; = \; c\left(\frac{data\_medium\_size}{f_{RTT}\sqrt{loss_{rate}}}\right)$$

dans lequel :

*total_rate_stream_x* = min *(bit_rate_per_stream_x, 2xReceiving_Rate_x),* dans laquelle *total_rate_stream_x* représente la largeur de bande disponible pour transmission de données dans un xième flot de données, et :

*total_rate = total_rate_stream_1 + total_rate_stream_2 + ... + total_rate_stream_n,* dans lequel *total_rate* représente la limite supérieure du débit de transmission que les débits de transmission individuels de chaque flot de données séparé, une fois additionnés ensemble, ne devraient pas dépasser ;

dans lequel x $\in$ {1, 2, ..., n}, *data_medium_size* est une indication quantitative de la taille moyenne des données envoyées sur le réseau par flot, c est une constante dans la fourchette de 0,87 $\leq$ *c* $\leq$ 1,31, et *n* est le nombre de flots de données à transmettre.

**9.** Procédé selon l'une quelconque des revendications précédentes, dans lequel les données transmises dans au moins un sous-ensemble de deux ou plus des flots de données sont liées.

**10.** Procédé selon la revendication 9, dans lequel au moins l'un desdits flots de données contient des données temps réel d'un premier type, et un ou plusieurs autres desdits flots de données contient des données temps réel d'un second type lié auxdites données dudit premier type.

**11.** Procédé de transmission de données, comprenant la génération d'une pluralité de flots de données, puis la transmission desdits flots de données sur un réseau, en utilisant un procédé de transmission de données selon l'une quelconque des revendications 1 à 10.

**12.** Système de transmission de données, d'un côté émission (40) à un côté récepteur (50) sur un réseau, comprenant :

des moyens de calcul de débit de transmission (46), pour calculer un débit de transmission total pour la transmission de données en utilisant une formule de débit de transmission ;

des moyens de transmission de flot de données (47, 49), pour transmettre des données sur le réseau pour transmission à un récepteur, en au moins deux flots de données séparés, à un débit binaire de transmission respectif ; et

des moyens de commande de flot de données (48), pour commander les débits de transmission de données respectifs d'au moins un sous-ensemble des flots de données respectifs, de manière à négocier un débit binaire entre lesdits flots ;

dans lequel les moyens de commande de flot de données sont en outre susceptibles de fonctionner de manière que la somme des débits de transmission respectifs de chaque flot de données soit commandée pour être sensiblement identique ou inférieure au débit de transmission total calculé ;

**caractérisé en ce que** lesdits moyens de calcul de débit de transmission (46) sont agencés pour calculer ledit débit de transmission total sur le côté émission avant la transmission desdites données.

**13.** Système selon la revendication 12, dans lequel les moyens de commande de flot de données (48) sont en outre agencés pour commander les débits de transmission de données des flots de données de manière à empêcher que des tampons à données (52, 54) situés dans le récepteur qui reçoit les données dans les flots de données n'entrent en débordement

14. Système selon l'une quelconque des revendications 12 ou 13, comprenant en outre des moyens de réception de données (41), pour la réception de données de retour de la part du récepteur (50) ; dans lequel les moyens de commande de flot de données (48) sont en outre agencés pour la commande des débits de transmission de données d'au moins un sous-ensemble des flots de données respectifs, en réponse aux données reçues.

15. Système selon la revendication 14, dans lequel les données de retour reçues sont indicatives d'au moins le débit de décodage des données transmises dans chaque flot de données reçu au récepteur (50) ; et les moyens de commande de flot de données (48) sont en outre agencés pour commander les débits de transmission des flots de données commandés en fonction d'au moins les débits de décodage au récepteur.

16. Système selon la revendication 15, dans lequel, dans le cas de deux flots de données, les débits de transmission respectifs sont commandés selon les équations :

$$sr\_str\_1 = \frac{y(tr - dr\_str2) + x(dr\_str1)}{x + y}$$

$$sr\_str\_2 = \frac{x(tr - dr\_str1) + y(dr\_str2)}{x + y}$$

dans lesquelles les variables sont les suivantes :

Sr_str_1 : débit d'émission du premier flot de données ;
Sr_str_2 : débit d'émission du deuxième flot de données ;
tr : débit de transmission total calculé ;
dr_str1 : débit de décodage au récepteur des données dans le premier flot de données ;
dr_str2 : débit de décodage au récepteur des données dans le deuxième flot de données ;
x : un coefficient de taux de remplissage d'un premier tampon dans le récepteur, qui reçoit des données venant du premier flot de données ; et
y : un coefficient de taux de remplissage d'un deuxième tampon dans le récepteur, qui reçoit des données venant du deuxième flot de données.

17. Système selon l'une quelconque des revendications 12 à 16, dans lequel le débit de transmission total est calculé pour fournir sur le réseau un débit de données moyen similaire à celui obtenu en utilisant le Transport Control Protocol (TCP).

18. Système selon l'une quelconque des revendications 12 à 17, comprenant en outre :

des moyens de réception de données (41), pour la réception de la part du récepteur de données de retour indicatives d'une ou plusieurs valeurs de temps de propagation aller et retour (round trip time - RTT), une valeur de taux de perte, et/ou une valeur de débit de réception au récepteur ; et dans lequel les moyens de calcul de débit de transmission (46) sont en outre agencés pour calculer le débit de transmission total, en fonction d'une ou plusieurs des valeurs reçues, indiquées par les données de retour ;
dans lequel le temps de propagation aller et retour est une indication quantitative du temps que prennent les données pour cheminer d'un émetteur (40) au récepteur (50) et retour à l'émetteur ; la valeur de taux de perte est une indication quantitative de la quantité de donnés transmise au récepteur et perdues ; et la valeur de débit de réception est le nombre de bits reçus pendant le temps de propagation aller et retour.

19. Système selon la revendication 18, dans lequel le débit de transmission total est calculé selon :

$$bit\_rate\_per\_stream\_x = c\left(\frac{data\_medium\_size}{f_{RTT}\sqrt{loss_{rate}}}\right)$$

dans lequel :

*total_rate_stream_x* = **min** *(bit_rate_per_stream_x, 2xReceiving_Rate_x),* dans laquelle *total_rate_stream_x* représente la largeur de bande disponible pour transmission de données dans un xième flot de données, et :

*total_rate = total_rate_stream_1 + tototal_rate_stream_2 + ... + total_rate_stream_n,* dans lequel *total_rate* représente la limite supérieure du débit de transmission que les débits de transmission individuels de chaque flot de données séparé, une fois additionnés ensemble, ne devraient pas dépasser ;
dans lequel $x \in \{1, 2, ..., n\}$, *data_medium_size* est une indication quantitative de la taille moyenne des données envoyées sur le réseau, c est une constante dans la fourchette de $0,87 \leq c \leq 1,31$, et *n* est le nombre de flots de données à transmettre.

**20.** Système selon l'une quelconque des revendications 12 à 19, dans lequel les données transmises dans au moins un sous-ensemble de deux ou plus des flots de données sont liées.

**21.** Système selon la revendication 20, dans lequel au moins l'un desdits flots de données contient des données temps réel d'un premier type, et un ou plusieurs autres desdits flots de données contient des données temps réel d'un second type lié auxdites données dudit premier type.

**22.** Support de stockage lisible par un ordinateur, stockant un programme informatique qui, lorsqu'il fonctionne sur un ordinateur, commande l'ordinateur pour mettre en oeuvre un procédé selon l'une quelconque des revendications 1 à 11.

**23.** Procédé de réception de données à partir d'un réseau, les données ayant été transmises selon un procédé de transmission tel que revendiqué à l'une quelconque des revendications 1 à 11, le procédé comprenant les étapes consistant à :

recevoir (S1) au moins deux flots de données séparés, chacun à un débit de transmission de données respectif ;
faire passer les données reçues dans chaque flot à un tampon à données respectif pour y effectuer une mise en tampon ;
calculer (S5, S7, S9) une ou plusieurs valeurs quantitatives, indicatives d'une ou plusieurs caractéristiques des données reçues ; et
envoyer (S13) les valeurs quantitatives calculées à un émetteur (50), pour utilisation dans le calcul du débit de transmission total pour des données transmises à partir de celui-ci.

**24.** Procédé selon la revendication 23, comprenant en outre l'étape consistant à :

décoder les données dans chaque tampon, à un débit de décodage respectif ;
dans lequel les débits de décodage de données respectifs sont transmis à l'émetteur, en tant qu'au moins l'une des valeurs quantitatives calculées.

**25.** Procédé selon la revendication 23 ou 24, dans lequel l'étape de calcul (S5, S7, S9) comprend en outre le calcul d'une ou plusieurs parmi une valeur de temps de propagation aller et retour (round trip time - RTT), une valeur de taux de perte, et/ou une valeur de débit de réception, en tant qu'une ou plusieurs valeurs quantitatives, dans lequel le temps de propagation aller et retour est une indication quantitative du temps que prennent les données pour cheminer d'un émetteur (40) à un récepteur (50) et retour à l'émetteur ; la valeur de taux de perte est une indication quantitative de la quantité de donnés transmise au récepteur et perdues ; et la valeur de débit de réception est le nombre de bits reçus pendant le temps de propagation aller et retour.

**26.** Procédé selon la revendication 25, dans lequel le débit d'évènements perte est calculé en utilisant un filtre pondéré des *n* intervalles de perte les plus récents, qui sont la quantité de données reçue entre deux évènements perte.

27. Système pour recevoir des données à partir d'un réseau, les données ayant été transmises selon un système de transmission tel que revendiqué à l'une quelconque des revendications 12 à 21, le système comprenant :

des moyens de réception de données (57), pour recevoir au moins deux flots de données séparés, chacun à un débit de transmission de données respectif ;
au moins deux tampons à données (52, 54), agencés pour recevoir en son sein des données provenant des flots de données reçus respectifs ;
des moyens de calcul (56), pour calculer une ou plusieurs valeurs quantitatives, indicative d'une ou plusieurs caractéristiques des données reçues ; et
des moyens de transmission de données (58), pour transmettre les valeurs quantitatives calculées à un émetteur (40), pour utilisation dans le calcul du débit de transmission total pour des données transmises à partir de celui-ci.

28. Système selon la revendication 27, comprenant en outre des moyens de décodage de données (53, 55) pour décoder les données dans chaque tampon (52, 54), à un débit de décodage respectif ;
dans lequel les débits de décodage de données respectifs sont transmis à l'émetteur, à titre d'au moins l'une des valeurs quantitatives calculées.

29. Système selon la revendication 27 ou 28, dans lequel les moyens de calcul (56) sont en outre susceptibles de fonctionner pour calculer une ou plusieurs parmi une valeur de temps de propagation aller et retour (round trip time - RTT), une valeur de taux de perte, et/ou une valeur de débit de réception, en tant qu'une ou plusieurs valeurs quantitatives, dans lequel le temps de propagation aller et retour est une indication quantitative du temps que prennent les données pour cheminer d'un émetteur (40) à un récepteur (50) et retour à l'émetteur ; la valeur de taux de perte est une indication quantitative de la quantité de donnés transmise au récepteur et perdues ; et la valeur de débit de réception est le nombre de bits reçus pendant le temps de propagation aller et retour.

30. Système selon la revendication 29, dans lequel les moyens de calcul (56) comprennent en outre des moyens de filtre pondérés, pour calculer le débit d'évènements perte en utilisant un filtre pondéré des $n$ intervalles de perte les plus récents, qui sont la quantité de données reçue entre deux évènements perte.

31. Support de stockage lisible par un ordinateur, stockant un programme informatique qui, lorsqu'il est exécuté sur un ordinateur, commande l'ordinateur de manière qu'il mette en oeuvre le procédé des revendications 23 à 26.

'live'

Network protocols { TCP, UDP, TCPfriendly }

Encoder

buffer1

buffer2

Server

NETWORK

Client

WWW
WIRELESS { Lost packets, Delay }

'On-demand'

Fig.1 (Prior Art)

EP 1 428 358 B1

Fig.2 (Prior Art)

Fig.3

A/V Data In

41

Multimedia Application Controller

Control Messages (TCP)

Network controller

Network Connection

47

48

Audio Video (UDP)

Re-Transmssion Buffer

Sending Rate Calculator

49

46

Fig. 4

40

EP 1 428 358 B1

30

Fig. 5

Start

S.2 — Calculate *total_rate*

S.4 — Calculate *audio_rate* and *video_rate*

S.6 — Transmit audio and video streams at calculated rates

S.8 — Receive feedback data from receiver

## Fig.6

Start

S.72 — Detect lost packet

S.74 — Calculate loss interval

S.76 — Calculate weighted average loss interval for *n* most recent intervals

Calculate loss event rate = 1/average loss interval

S.78

End

## Fig.8

```
                          ┌──────────┐
                          │  Start   │
                          └────┬─────┘
                               │
        ┌──────────────────────▼──────────────────────┐◄─┐
  S.1   │      Receive audio and video data stream     │  │
        └──────────────────────┬──────────────────────┘  │
                               │                          │
        ┌──────────────────────▼──────────────────────┐  │
  S.3   │       Check audio and video buffer status    │  │
        └──────────────────────┬──────────────────────┘  │
                               │                          │
                 ┌─────────────▼─────────────┐            │
  S.5            │      Calculate RTT         │            │
                 └─────────────┬─────────────┘            │
                               │                          │
              ┌────────────────▼────────────────┐         │
  S.7         │     Calculate loss event rate    │         │
              └────────────────┬────────────────┘         │
                               │                          │
        ┌──────────────────────▼──────────────────────┐  │
  S.9   │        Calculate received data rate          │  │
        └──────────────────────┬──────────────────────┘  │
                               │                          │
        ┌──────────────────────▼──────────────────────┐  │
  S.11  │     Measure audio and video decode rates     │  │
        └──────────────────────┬──────────────────────┘  │
                               │                          │
        ┌──────────────────────▼──────────────────────┐  │
  S.13  │      Transmit feedback packet to server      │  │
        └──────────────────────┬──────────────────────┘  │
                               └──────────────────────────┘
```

# Fig. 7

**FILTER**

Fig 9

Fig 10

Fig. 11

EP 1 428 358 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1045555 A

### Non-patent literature cited in the description

- **Tannenbaum A.S.** Computer Networks. Prentice Hall, 521-542

- **Floyd S.** Connections with Multiple Congested Gateways in Packet Switched Networks Part 1: One Way Traffic. *Computer Communications Review,* October 1991, vol. 21 (5), 30-47